(19) Europäisches Patentamt
European Patent Office
Office européen des brevets

(11) **EP 4 703 443 A1**

(12) **EUROPEAN PATENT APPLICATION**

(43) Date of publication:
**04.03.2026 Bulletin 2026/10**

(21) Application number: **25197196.6**

(22) Date of filing: **21.08.2025**

(51) International Patent Classification (IPC):
***C09D 11/324*** *(2014.01)* ***C09D 11/322*** *(2014.01)*
***C09D 11/38*** *(2014.01)*

(52) Cooperative Patent Classification (CPC):
**C09D 11/324; C09D 11/322; C09D 11/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.08.2024 JP 2024145757**
**27.08.2024 JP 2024145759**
**18.07.2025 JP 2025121524**

(71) Applicant: **Canon Kabushiki Kaisha**
**Tokyo, 146-8501 (JP)**

(72) Inventors:
- **NAKAGAWA, Kouhei**
  **Tokyo (JP)**
- **SAITO, Takashi**
  **Tokyo (JP)**
- **KIMURA, Kazuki**
  **Tokyo (JP)**

(74) Representative: **WESER & Kollegen Patentanwälte PartmbB**
**Radeckestraße 43**
**81245 München (DE)**

(54) **AQUEOUS INK, INK CARTRIDGE AND INK JET RECORDING METHOD**

(57) Provided is an aqueous ink for ink jet using a self-dispersible pigment as a coloring material, the aqueous ink being capable of recording an image having excellent color developability and the aqueous ink being capable of suppressing the deposition of an aggregate in the cap of a recording head. The aqueous ink is an aqueous ink for ink jet including a self-dispersible pigment. The self-dispersible pigment is a self-dispersible pigment in which a group represented by the general formula (1) is bonded to a surface of a particle of a pigment, and the aqueous ink has a dynamic surface tension at 10 milliseconds of 52 mN/m or less. In the general formula (1), $M^1$s each independently represent a hydrogen atom, an alkali metal, ammonium or an organic ammonium, and * represents a bonding position to the surface of the particle of the pigment.

FIG. 1

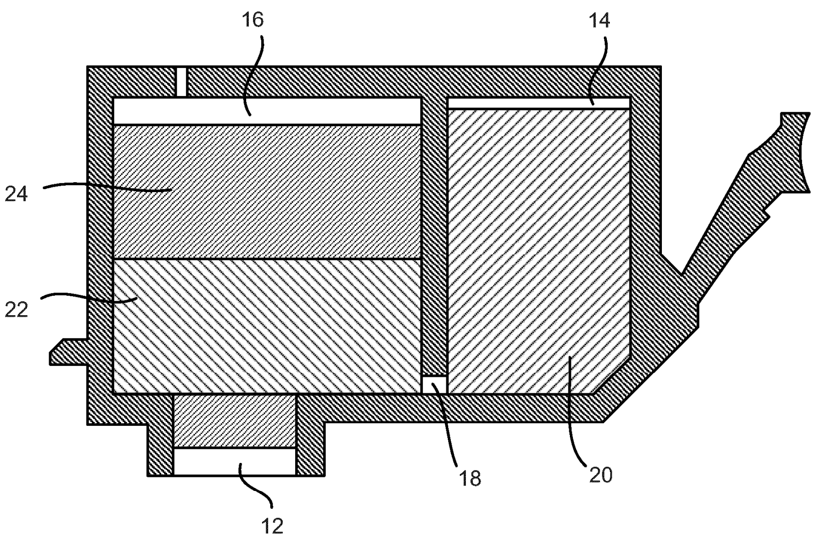


EP 4 703 443 A1

## Description

TECHNICAL FIELD

The present disclosure relates to an aqueous ink, an ink cartridge and an ink jet recording method.

BACKGROUND

The frequency at which an ink jet recording apparatus is utilized in an office has started to increase in recent years. In such applications, the achievement of a high level of image quality particularly on various kinds of plain paper out of recording media and the maintenance of an ejection characteristic at the time of long-term use of a recording apparatus are required.

To cope with those requirements, as a technology for the achievement of both of image quality and reliability, there is a proposal of an ink containing, as a coloring material, a self-dispersible pigment obtained by modifying a pigment through the bonding of an organic group to the surface of a particle of the pigment. For example, in Japanese Patent Laid-Open No. 2009-506196, there is a proposal of a modified pigment having bonded thereto an organic group having a carboxylic acid group. In Japanese Patent Laid-Open No. 2009-515007, there is a proposal of an improvement in optical density of an image through use of a self-dispersible pigment for which a functional group having high reactivity with calcium is selected based on a calcium index number specifying an indicator of reactivity with calcium. In addition, in Japanese Patent Laid-Open No. 2006-045514, there is a proposal of an ink containing: a pigment in which an ionic group is bonded to the surface of its particle directly or through any other atomic group; and a good solvent and a poor solvent for the pigment. According to the proposal, it has been said that even when the application amount of the ink is small, an image having a satisfactory area factor and a high optical density (color developability) can be recorded.

With a view to achieving both of image quality and reliability, the inventors have used various self-dispersible pigments, in each of which an organic group is bonded to the surface of a pigment particle, to prepare aqueous inks for ink jet corresponding to the respective various self-dispersible pigments. The inventors have performed an image quality evaluation by using various kinds of plain paper as recording media. As a result, on some recording media, images each having high color developability have been recorded. In contrast, however, there have existed recording media on which images each having low color developability are recorded with a large part of the aqueous inks using the various self-dispersible pigments. Thus, the inventors have found that the level of the color developability is not sufficient.

In addition, there have existed aqueous inks using the self-dispersible pigments, the inks being capable of recording images each having sufficient color developability even on recording media on which images each having low color developability are recorded with part of the aqueous inks using the self-dispersible pigments. However, the inventors have found that when an image is recorded with an ink jet recording apparatus mounted with the aqueous ink over a long time period, the quality of the image may reduce. As a result of observation, the ink discharged into the cap of a recording head has been deposited, and the deposit has adhered to the vicinity of an ejection orifice of the recording head to preclude normal ejection.

SUMMARY

Accordingly, the present disclosure is directed to provide an aqueous ink for ink jet using a self-dispersible pigment as a coloring material, the aqueous ink being capable of recording an image having excellent color developability and the aqueous ink being capable of suppressing the deposition of an aggregate in the cap of a recording head. In addition, the present disclosure is also directed to provide an ink cartridge and an ink jet recording method each using the aqueous ink.

That is, according to the present disclosure, there is provided an aqueous ink for ink jet including a self-dispersible pigment, wherein the self-dispersible pigment is a self-dispersible pigment in which a group represented by the following general formula (1) is bonded to a surface of a particle of a pigment, and wherein the aqueous ink has a dynamic surface tension at 10 milliseconds of 52 mN/m or less.

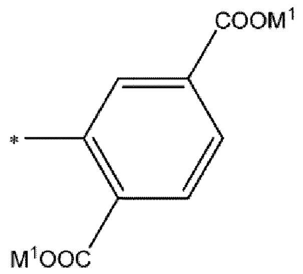

(1)

In the general formula (1), $M^1$s each independently represent a hydrogen atom, an alkali metal, ammonium or an organic ammonium, and * represents a bonding position to the surface of the particle of the pigment.

According to the present disclosure, there can be provided the aqueous ink for ink jet using a self-dispersible pigment as a coloring material, the aqueous ink being capable of recording an image having excellent color developability and the aqueous ink being capable of suppressing the deposition of an aggregate in the cap of a recording head. In addition, according to the present disclosure, there can be provided the ink cartridge and the ink jet recording method each using the aqueous ink.

Features of the present disclosure will become apparent from the following description of embodiments with reference to the attached drawings. The following description of embodiments is described by way of example.

BRIEF DESCRIPTION OF THE DRAWINGS

Fig. 1 is a sectional view for schematically illustrating an ink cartridge according to one embodiment of the present disclosure.

Fig. 2A and Fig. 2B are each a view for schematically illustrating an example of an ink jet recording apparatus to be used in an ink jet recording method of the present disclosure, in which Fig. 2A is a perspective view of the main portion of the ink jet recording apparatus and Fig. 2B is a perspective view of a head cartridge.

Fig. 3 is a schematic view for illustrating an example of the cleaning portion of the ink jet recording apparatus.

DESCRIPTION OF THE EMBODIMENTS

The present disclosure is described in more detail below by way of exemplary embodiments. In the present disclosure, when a compound is a salt, the salt is present in a state of dissociating into ions in an ink, but the expression "contains the salt" is used for convenience. In addition, an aqueous ink for ink jet is sometimes simply described as "ink". Physical property values are values at normal temperature (25°C) and normal pressure (1 atm) unless otherwise stated. In addition, the unit "mmol/kg" in the present disclosure is calculated by defining the specific gravity of the ink as "1 g/mL."

When one and the same aqueous ink is used, a recording medium having recorded thereon an image having low color developability has, for example, the following characteristics: as compared to a recording medium having recorded thereon an image having high color developability, the permeation rate of the ink is high and the abundance of an inorganic salt causing the aggregation of a pigment such as calcium is small. In such recording medium, many of pigment inks each containing, as a coloring material, the related-art self-dispersible pigment in which an organic group is bonded to the surface of a pigment particle are each liable to sink into the recording medium before its aggregation on the surface of the recording medium or in the vicinity thereof after the application of an ink to the recording medium. Accordingly, in the ink described in each of Japanese Patent Laid-Open No. 2009-515007 and Japanese Patent Laid-Open No. 2006-045514, the amount of the pigment present on the surface of the recording medium and in the vicinity thereof is small. In addition, the pigment sinks into the recording medium to reduce the color developability of an image.

It is conceivable that when the aggregation of a self-dispersible pigment is quickened after the application of an ink to a recording medium, high color developability can be achieved even in such a recording medium having recorded thereon an image having low color developability as described above. In an ink using a surface-modified pigment obtained by a diazotization reaction between 5-amino-1,2,3-benzenetricarboxylic acid and carbon black, the pigment being described in each of Japanese Patent Laid-Open No. 2009-506196 and Japanese Patent Laid-Open No. 2009-515007, the aggregation of the particles of the pigment along with the evaporation of a liquid component after the adhesion of the ink to a recording medium is extremely fast as compared to any other self-dispersible pigment. Accordingly, the thickening of the ink applied to the recording medium is drastically advanced by the aggregation of the particles of the pigment along with the evaporation of the liquid component. Because of the characteristic, even in the above-mentioned recording medium having recorded thereon the image having low color developability, the thickening of

the ink and the aggregation of the pigment occur before the pigment sinks into the recording medium. Thus, the pigment can be present in a large amount on the surface of the recording medium and in the vicinity thereof, and hence high color developability can be achieved.

However, the ink containing the above-mentioned surface-modified pigment thickens fast at the time of the evaporation of its liquid component. Accordingly, also in the case of the ink discharged into a cap by preliminary ejection or a suction operation, the pigment in the ink quickly and strongly aggregates along with the evaporation of the liquid component. In general, when an ink jet recording apparatus is used over a long time period, the ink discharged into the cap is mixed with the ink newly discharged into the cap before a rigid aggregate is formed. Thus, the mixed ink is discharged from the outlet of the cap to the outside. In contrast, in the ink containing the surface-modified pigment using 5-amino-1,2,3-benzenetricarboxylic acid, a rigid aggregate is quickly formed in the cap. Accordingly, the aggregate cannot be discharged, and hence such aggregates are deposited in the cap one after another. The inventors have found that when the deposit adheres to the surface of a recording head having formed therein an ejection orifice, normal ejection is no longer performed.

As described above, in the related art, it has been difficult to achieve both the recording of an image excellent in color developability with an ink containing a self-dispersible pigment as a coloring material and the suppression of the deposition of an aggregate in the cap of a recording head. However, an investigation made by the inventors has found that when a self-dispersible pigment in which a group represented by the general formula (1) is bonded to the surface of a pigment particle is used in an ink, and the dynamic surface tension of the ink at 10 milliseconds is controlled to 52 mN/m or less, both of the above-mentioned recording and suppression can be achieved. The inventors have assumed a reason therefor to be as described below.

First, the inventors have investigated a factor for an improvement in color developability. As a result, the inventors have found that in the ink including the self-dispersible pigment in which the group represented by the general formula (1) is bonded to the surface of the pigment particle, the aggregation of the pigment at the time of the evaporation of a liquid component after its application to a recording medium is gentle as compared to any other self-dispersible pigment. Accordingly, it has been suggested that the mechanism via which high color developability is expressed is different from that based on the quickness of aggregation observed in the ink containing the surface-modified pigment obtained by the diazotization reaction between 5-amino-1,2,3-benzenetricarboxylic acid and carbon black. As a result of a further investigation, the inventors have found that the adsorptivity of the self-dispersible pigment in which the group represented by the general formula (1) is bonded to the surface of the pigment particle to cellulose serving as a constituent component for a recording medium such as plain paper is specifically high as compared to any other self-dispersible pigment. Because of the characteristic, when the ink is applied to the recording medium, the self-dispersible pigment in which the group represented by the general formula (1) is bonded to the surface of the pigment particle adsorbs to the cellulose of the recording medium, and hence does not sink into the recording medium. Thus, the pigment can be present on the surface of the recording medium and in the vicinity thereof. Further, when the dynamic surface tension of the ink including the self-dispersible pigment in which the group represented by the general formula (1) is bonded to the surface of the pigment particle at 10 milliseconds is controlled to 52 mN/m or less, an ink droplet quickly wet-spreads on the surface of the recording medium after its adhesion to the recording medium. The self-dispersible pigment in which the group represented by the general formula (1) is bonded to the surface of the pigment particle adsorbs to the surface of the recording medium along with the wet spread. Thus, even when the application amount of the ink is small, the recording medium can be efficiently covered with the pigment.

It is assumed that an image excellent in color developability can be recorded because of the foregoing reasons. An improvement in color developability of an image by the self-dispersible pigment in which the group represented by the general formula (1) is bonded to the surface of the pigment particle can be expressed without utilization of drastic thickening of the ink applied to a recording medium at the time of the evaporation of its liquid component, and hence the deposition of an aggregate in the cap of a recording head can be suppressed. Accordingly, both the recording of an image excellent in color developability and the suppression of the deposition of an aggregate in the cap of the recording head can be achieved.

<Aqueous Ink>

An aqueous ink of the present disclosure is an aqueous ink for ink jet, which includes a self-dispersible pigment and has a dynamic surface tension at 10 milliseconds of 52 mN/m or less. The self-dispersible pigment is a self-dispersible pigment in which a group represented by the general formula (1) is bonded to the surface of a particle of a pigment. The ink of the present disclosure does not need to be a so-called "curable ink." Accordingly, the ink of the present disclosure may be free of a compound such as a polymerizable monomer that may be polymerized by the addition of external energy. Respective components for forming the ink of the present disclosure and the physical properties of the ink are described in detail below.

(Self-dispersible Pigment)

The ink includes, as a coloring material, the self-dispersible pigment in which the group represented by the general formula (1) is bonded to the surface of the particle of the pigment. The ink may include one kind of the self-dispersible pigments, in each of which the group represented by the general formula (1) is bonded to the surface of the particle of the pigment, alone, or may include two or more kinds thereof. In addition, the self-dispersible piment may be a self-dispersible pigment in which one kind of the groups each represented by the general formula (1) is bonded to the surface of the particle of the pigment, or the self-dispersible pigment may be a self-dispersible pigment in which two or more kinds thereof different from each other in $M^1$s in the general formula (1) are bonded thereto. The content (% by mass) of the self-dispersible pigment in the ink is preferably 0.10% by mass or more to 15.00% by mass or less, more preferably 1.00% by mass or more to 10.00% by mass or less with respect to the total mass of the ink.

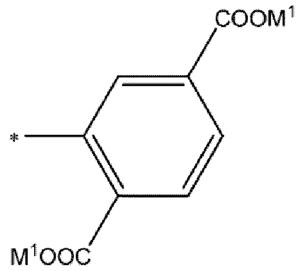

(1)

In the general formula (1), $M^1$s each independently represent a hydrogen atom, an alkali metal, ammonium or an organic ammonium, and * represents a bonding position to the surface of the particle of the pigment.

[Functional Group]

The carboxylic acid groups each represented by $COOM^1$ in the general formula (1) are each one kind of anionic group, and at least part of the groups may each form a salt. When the carboxylic acid groups each form a salt, at least one proton of each of the groups is substituted with a cation. Examples of the cation may include an alkali metal ion, an ammonium ion and an organic ammonium ion. Examples of the alkali metal ion may include ions of lithium, sodium and potassium. Examples of the organic ammonium ion may include cations of: aliphatic amines, such as mono- to trialkylamines; and aliphatic alkanolamines, such as mono- to trialkanolamines, and salts thereof. The anionic group is particularly preferably an alkali metal salt form, such as a sodium salt or a potassium salt, or an ammonium salt form.

[Kind of Pigment and Physical Property Values]

As the pigment for forming the self-dispersible pigment, there may be used, for example: an inorganic pigment, such as carbon black, calcium carbonate or titanium oxide; or an organic pigment, such as azo, phthalocyanine, quinacridone, isoindolinone, imidazolone, diketopyrrolopyrrole or dioxazine. Those pigments may be used alone or in combination thereof. In addition, a dye or the like may be further used in combination in addition to the pigment for the purpose of, for example, toning its color. Of the pigments, carbon black is preferably used. Examples of the carbon black may include furnace black, lamp black, acetylene black and channel black. Those carbon blacks may be used alone or in combination thereof.

The DBP oil absorption of the carbon black is preferably 50 mL/100 g or more to 200 mL/100 g or less. In particular, the DBP oil absorption is more preferably 120 mL/100 g or more to 170 mL/100 g or less, particularly preferably 120 mL/100 g or more to 150 mL/100 g or less. The DBP oil absorption of the carbon black may be measured by a method in conformity with JIS K6221 or ASTM D-2414. Those methods are each a method including: dropping dibutyl phthalate into 100 g of the carbon black under stirring; and measuring the addition amount of dibutyl phthalate at the time point when torque becomes maximum.

The specific surface area of the carbon black based on a BET method is preferably 100 $m^2$/g or more to 600 $m^2$/g or less. The specific surface area of the carbon black based on the BET method may be measured by a method in conformity with, for example, JIS K6217 or ASTM D-6556. Those methods are each a method including: immersing the carbon black that has been deaerated in liquid nitrogen; and measuring the amount of nitrogen adsorbing to the surface of the particle of the carbon black when equilibrium is reached. The specific surface area of the carbon black based on the BET method is more preferably 200 $m^2$/g or more. When carbon black having a specific surface area based on the BET method of 200 $m^2$/g or more is selected, such a surface area that the self-dispersible pigment can effectively adsorb to cellulose can be secured, and hence the color developability of an image is further improved.

The primary particle diameter of the carbon black is preferably 10 nm or more to 40 nm or less. The carbon black is typically present under the state of a secondary particle in which a plurality of primary particles three-dimensionally stretch like a bunch of grapes. The primary particle diameter means the particle diameter of the carbon black (primary particle) serving as the minimum unit for forming one secondary particle. The primary particle diameter of the carbon black may be determined as an arithmetic average obtained by: observing about 100 primary particles of the carbon black each serving as the minimum unit for forming the secondary particle with a transmission or scanning electron microscope; and measuring their particle diameters, followed by their averaging.

The average particle diameter of the carbon black is preferably 50 nm or more to 200 nm or less. The average particle diameter of the carbon black means the particle diameter of the carbon black in a form in which the carbon black typically exists, that is, as a secondary particle. The average particle diameter of the carbon black may be measured as a 50% cumulative value [$D_{50}$ (nm)] in a volume-based particle diameter distribution with, for example, a particle size distribution-measuring apparatus of a dynamic light scattering system.

When the particle diameter of the pigment is extremely large or when the particle diameter is extremely small, the measurement of the surface charge amount thereof by colloidal titration to be described later may be affected by the particle diameter. To obtain the ejection characteristic of the ink of the present disclosure serving as an ink for ink jet at a high level while improving measurement accuracy, the average particle diameter ($D_{50}$) of the pigment is preferably 60 nm or more to 180 nm or less. In addition, the 90% cumulative value of the pigment in a volume-based particle diameter distribution ($D_{90}$) is preferably 100 nm or more to 320 nm or less.

[Method of producing Self-dispersible Pigment]

Methods of producing self-dispersible pigments are roughly classified into an oxidation type and a surface modification type. A production method of a surface modification type by which the chemical structure and amount of a surface functional group can be controlled is selected for a self-dispersible pigment to be used in an aqueous ink. A production method of a surface modification type may be, for example, a method including chemically treating a pigment through use of, for example, a compound that may produce a diazonium salt, an azo compound, a diazene compound or a triazine compound as a treatment agent. The following step is preferably performed as a method of bonding the group represented by the general formula (1) to the surface of the particle of the pigment: a compound having the group represented by the general formula (1) is used as a treatment agent, and the surface of the pigment is treated with the treatment agent.

[Anionic Group Amount]

The amount of an anionic group bonded to the surface of the particle of the pigment may be measured as the surface charge amount of the self-dispersible pigment. The surface charge amount may be measured by colloidal titration utilizing a potential difference. A larger value of the surface charge amount means a larger anionic group amount and a smaller value thereof means a smaller anionic group amount. The anionic group amount (mmol/g) of the self-dispersible pigment is an amount (mmol) per 1 g of the solid content of the self-dispersible pigment. In Examples to be described later, the anionic group amount of a self-dispersible pigment in a pigment dispersion liquid was measured through use of a potential difference automatic titration apparatus (product name: "AT-510", manufactured by Kyoto Electronics Manufacturing Co., Ltd.) mounted with a flow potential titration unit (PCD-500) by colloidal titration utilizing a potential difference. Methyl glycol chitosan was used as a titration reagent. The anionic group amount may be measured through use of the self-dispersible pigment extracted from the ink by an appropriate method. At the time of the preparation of a sample, preliminary preparation, such as the washing of the self-dispersible pigment or the centrifugation of the sample (pigment dispersion liquid), is preferably performed so that the anionic group amount may be measured with high accuracy as a result of the removal of impurities and the like.

The anionic group amount (mmol/g) of the self-dispersible pigment is preferably 0.09 mmol/g or more to 0.20 mmol/g or less. When the anionic group amount of the self-dispersible pigment is 0.09 mmol/g or more, the functional group bonded to the surface of the pigment particle is sufficiently present, and hence the amount of the exposed portion of the surface of the pigment particle reduces. Thus, at the time of the drying of the ink in a cap, strong aggregation of the exposed portions of the pigment is easily suppressed. Accordingly, the redispersion and discharge of the ink in the cap are easily performed, and hence a suppressing effect on the deposition of an aggregate in the cap is further improved with ease. Meanwhile, in the case where the anionic group amount of the self-dispersible pigment is 0.20 mmol/g or less, the anionic group amount of the pigment is suppressed to a moderate level. In this case, the hydrophilicity of the pigment is moderately suppressed and hence its affinity for a liquid component in the ink is also moderately suppressed. Accordingly, after the application of the ink to a recording medium, adsorption is caused by an interaction between the pigment and cellulose on the surface of the recording medium in a relatively easy manner. Thus, the color developability of an image is further improved with ease. The anionic group amount of the self-dispersible pigment means an anionic group amount per

unit mass of the self-dispersible pigment, and may be adjusted by the amount of the group represented by the general formula (1), the group being bonded to the surface of the particle of the pigment. Although the pigment before the performance of treatment for bonding the group represented by the general formula (1) may have an extremely small amount of an anionic group, the amount is negligible.

(Compound represented by General Formula (2))

The ink preferably includes a compound represented by the following general formula (2). In this case, the ink may include one or two or more kinds of the compounds each represented by the general formula (2). The content C (mmol/kg) of the compound represented by the general formula (2) in the ink is preferably 0.030 mmol/kg or more to 12.800 mmol/kg or less. The above-mentioned content C (mmol/kg) is more preferably 0.040 mmol/kg or more to 12. 000 mmol/kg or less, still more preferably 0.120 mmol/kg or more to 8.000 mmol/kg or less.

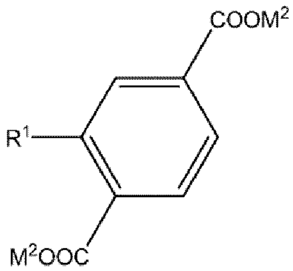

(2)

In the general formula (2), $R^1$ represents a hydroxy group or a nitro group, and $M^2$s each independently represent a hydrogen atom, an alkali metal, ammonium or an organic ammonium.

Examples of the alkali metal may include lithium, sodium and potassium. Examples of the organic ammonium may include: alkylamines each having 1 or more to 3 or less carbon atoms, such as methylamine and ethylamine; and mono-, di- or trialkanolamines each having 1 or more to 4 or less carbon atoms, such as monoethanolamine, diethanolamine, triethanolamine, monoisopropanolamine, diisopropanolamine and triisopropanolamine. $M^2$ particularly preferably represents an acid form, an alkali metal salt form, such as a sodium salt or a potassium salt, or an ammonium salt form.

When the compound represented by the general formula (2) is incorporated into the aqueous ink including the self-dispersible pigment in which the group represented by the general formula (1) is bonded to the surface of the particle of the pigment, a suppressing effect on the deposition of an aggregate in the cap of a recording head is further improved. At the time of the drying of the ink in the cap, out of the surface structure of the self-dispersible pigment in which the group represented by the general formula (1) is bonded to the surface of the particle of the pigment, the surface of the particle of the pigment serving as a hydrophobic moiety and the benzene ring moiety of a surface functional group thereof may interact with each other in such a manner as to be capable of causing the aggregation of the self-dispersible pigment. It is assumed that when the compound represented by the general formula (2) is present therein, the compound represented by the general formula (2) interacts with the hydrophobic moiety of the self-dispersible pigment or the benzene ring moiety to inhibit the aggregation, and hence the suppressing effect on the deposition is further improved.

From the viewpoint of the above-mentioned suppressing effect on the deposition, the content of the compound represented by the general formula (2) in the ink is preferably determined in relation to the content of the pigment. An investigation made by the inventors has found that the content C (mmol/kg) of the compound represented by the general formula (2) and the content P (% by mass) of the above-mentioned self-dispersible pigment in the aqueous ink preferably satisfy a relationship represented by the following formula (3) from the viewpoints of the color developability and the deposition suppression.

$$0.010 \leq C\ (\text{mmol/kg})/P\ (\%\ \text{by mass}) \leq 3.000 \quad (3)$$

When the value of the ratio "C (mmol/kg)/P (% by mass)" is 0.010 or more, a suppressing effect on the deposition of an aggregate in a cap is further improved with ease because the amount of the compound represented by the general formula (2) with respect to the self-dispersible pigment becomes sufficient. Meanwhile, in the case where the value of the ratio "C (mmol/kg)/P (% by mass)" is 3.000 or less, an image that is further excellent in color developability is easily obtained. In this case, the compound represented by the general formula (2) may be suppressed from adsorbing to a particle surface except a portion contributing to strong aggregation in the self-dispersible pigment because the amount of the compound represented by the general formula (2) with respect to the self-dispersible pigment is moderately suppressed. Accordingly, the following situation may hardly occur: an anionic group amount on the surface of the particle

of the pigment in the self-dispersible pigment increases to raise the affinity of the pigment for the liquid component in the ink. Thus, the following situation hardly occurs: after the application of the ink to a recording medium, adsorption caused by an interaction between its pigment and cellulose on the surface of the recording medium becomes relatively weak. Accordingly, it is assumed that it becomes easier to obtain an image that is further excellent in color developability.

From the viewpoint of achieving both the color developability of an image and the deposition suppression, the value of the above-mentioned ratio "C (mmol/kg)/P (% by mass)" is more preferably set to 0.030 or more to 2.000 or less. That is, the content C (mmol/kg) of the compound represented by the general formula (2) and the content P (% by mass) of the self-dispersible pigment in the aqueous ink more preferably satisfy a relationship represented by the following formula (4).

$$0.030 \leq C\ (\text{mmol/kg})/P\ (\%\ \text{by mass}) \leq 2.000 \qquad (4)$$

In addition, the molar ratio (times) of the content $C_1$ of the compound in which $R^1$ represents a hydroxy group out of the compounds each represented by the general formula (2) to the content C of the compounds each represented by the general formula (2) in the aqueous ink is preferably 0.60 times or more to 0.95 times or less. The content $C_1$ and the content C are each represented in the unit of mmol/kg. When the value of the ratio "$C_1$/C" is 0.60 times or more to 0.95 times or less, a suppressing effect on the deposition of an aggregate in a cap is further improved with ease.

As described above, the compound represented by the general formula (2) is assumed to interact with the hydrophobic moiety of the surface of the particle of the pigment, the benzene ring of a surface functional group thereof or the like out of the surface structure of the surface of the particle of the self-dispersible pigment to inhibit the aggregation of the self-dispersible pigment. Of the compounds each represented by the general formula (2), the compound in which $R^1$ in the general formula (2) represents a hydroxy group and a compound in which $R^1$ represents a nitro group are different from each other in substituent. Probably because of the difference, the compounds are also different from each other in moiety that interacts with the hydrophobic moiety or the like in a relatively strong manner or in moiety that interacts therewith in a relatively weak manner in accordance with a moiety involved in the aggregation of the self-dispersible pigment. It is assumed that when the above-mentioned ratio of the compound in which $R^1$ in the general formula (2) represents a hydroxy group is set to 0.60 times or more to 0.95 times or less, the two kinds of compounds mutually supplement their moieties, which each show the relatively weak interaction, to efficiently inhibit the aggregation, and hence a deposition-suppressing effect is improved.

The content $C_1$ (mmol/kg) of the compound in which $R^1$ in the general formula (2) represents a hydroxy group in the ink is preferably 0.024 mmol/kg or more to 10.240 mmol/kg or less. The above-mentioned content $C_1$ (mmol/kg) is more preferably 0.032 mmol/kg or more to 9.600 mmol/kg or less, still more preferably 0.096 mmol/kg or more to 6.400 mmol/kg or less.

(Resin)

A resin may be incorporated into the ink. Examples of the resin may include an acrylic resin, a urethane-based resin and an olefin-based resin. Examples of the form of the resin may include a block copolymer, a random copolymer, a graft copolymer and a combination thereof. In addition, the resin may be a water-soluble resin that may be dissolved in an aqueous medium or a resin particle that is dispersed in an aqueous medium. The resins may be used alone or in combination thereof. The content (% by mass) of the resin in the ink is preferably 0.10% by mass or more to 20.00% by mass or less, more preferably 0.50% by mass or more to 15.00% by mass or less with respect to the total mass of the ink.

(Aqueous Medium)

An aqueous medium, which is water or a mixed solvent of water and a water-soluble organic solvent, may be incorporated into the ink. Deionized water or ion-exchanged water is preferably used as the water. The content (% by mass) of the water in the ink is preferably 10.00% by mass or more to 95.00% by mass or less, more preferably 50.00% by mass or more to 95.00% by mass or less with respect to the total mass of the ink. In addition, the content (% by mass) of the water-soluble organic solvent in the ink is preferably 3.00% by mass or more to 50.00% by mass or less, more preferably 3.00% by mass or more to 40.00% by mass or less with respect to the total mass of the ink. Solvents that may be used in inks for ink jet, such as alcohols, (poly)alkylene glycols, glycol ethers, nitrogen-containing compounds and sulfur-containing compounds, may each be used as the water-soluble organic solvent. Those water-soluble organic solvents may be used alone or in combination thereof.

Of the water-soluble organic solvents, a first water-soluble organic solvent, which has a LogP value at a temperature of 25°C of -0.77 or less and a vapor pressure at 25°C of 1.9 Pa or more, and has, in its main chain, a chain hydrocarbon group having 2 or more to 4 or less carbon atoms, is preferably used. The use of the first water-soluble organic solvent can further improve the color developability of an image. Although the term "water-soluble organic solvent"

typically refers to a liquid, in the present disclosure, a solvent that is a solid at a temperature of 25°C is included in the water-soluble organic solvents. Specific examples of the water-soluble organic solvent that is a solid at 25°C, the solvent being widely used in inks, may include 1,6-hexanediol, trimethylolpropane, ethylene urea, urea and a polyethylene glycol having a number-average molecular weight of 1,000.

First, a Log Pow (LogP) value serving as an indicator indicating the polarity of a water-soluble organic solvent is described. The LogP value of the water-soluble organic solvent in the present disclosure is a value at 25°C. The LogP value refers to a partition coefficient between water and octanol (1-octanol). The LogP value is a physical property value related to the ease with which a substance of interest conforms to water, and as the value becomes smaller, the polarity of the substance becomes higher. The LogP value is calculated from the relational equation "$LogP=Log_{10}C_o/C_w$" ($C_o$ represents the concentration of the substance of interest in an octanol phase and $C_w$ represents the concentration of the substance of interest in a water phase). The LogP value may be experimentally determined by a method described in JIS Z 7260-107. In addition, the value may be determined by utilizing commercial calculation software such as software available under the product name "ACD/PhysChem Suite" (manufactured by ACD/Labs). In Examples to be described later, a value determined with software available under the product name "ACD/PhysChem Suite Version 12.00" (manufactured by ACD/Labs) was adopted. The water-soluble organic solvent to be incorporated into the ink is preferably a solvent having a vapor pressure at a temperature of 25°C lower than that of water.

Specific examples of the water-soluble organic solvent may include the following solvents (numerical values in parentheses represent their LogP values at a temperature of 25°C). That is, the examples include a polyethylene glycol having a number-average molecular weight of 1,000 (-6.35), a polyethylene glycol having a number-average molecular weight of 400 (-2.82), a polyethylene glycol having a number-average molecular weight of 200 (-1.88), tetraethylene glycol (-1.88), bishydroxyethylsulfone (-1.86), glycerin (-1.85), urea (-1.66), triethylene glycol (-1.65), diethylene glycol (-1.41), 1,2,6-hexanetriol (-1.39), ethylene glycol (-1.36), ethylene urea (-1.24), 1,3-propanediol (-1.09), 2-pyrrolidone (-1.09), 1,2-propanediol (-1.01), trimethylolpropane (-0.97), 1,4-butanediol (-0.77), 1,3-butanediol (-0.74), triethylene glycol dimethyl ether (-0.68), triethylene glycol monoethyl ether (-0.66), N-methyl-2-pyrrolidone (-0.64), γ-butyrolactone (-0.63), δ-valerolactam (-0.57), 1,5-pentanediol (-0.56), 1,2-butanediol (-0.50), 3-methyl-1,5-pentanediol (-0.21), δ-valerolactone (-0.10), 1,6-hexanediol (-0.05), isopropanol (0.18), triethylene glycol monobutyl ether (0.36), 1,2-hexanediol (0.52), ethylene glycol monobutyl ether (0.83), 1-pentanol (1.35), 1,2-octanediol (1.54) and tripropylene glycol monobutyl ether (1.66).

Next, the vapor pressure is described. The vapor pressure of the water-soluble organic solvent in the present disclosure is a value at 25°C. A value described in a book, such as "Solvent Pocketbook" (Ohmsha, Ltd.), may be utilized as the value of the vapor pressure. In addition, the vapor pressure may be determined by converting temperature-vapor pressure data described in "Handbook of Chemistry: Pure Chemistry, Revised Third Edition" (Maruzen) into a vapor pressure at 25°C based on the relationship "$InP=-\Delta Hvap/RT+C$" derived from the Clapeyron-Clausius equation. In the equation, P represents a vapor pressure, ΔHvap represents molar heat of evaporation (constant), R represents a gas constant, T represents a temperature, and C represents a constant. In addition, the vapor pressure may be determined by utilizing commercial calculation software such as "Advanced Chemistry Development (ACD/Labs) Software V11.02 (c1994-2023 ACD/Labs)." In Examples to be described later, a value determined with "Advanced Chemistry Development (ACD/Labs) Software V11.02 (c1994-2023 ACD/Labs)" was adopted.

Specific examples of the water-soluble organic solvent having a vapor pressure at 25°C of 1.9 Pa or more may include the following solvents (numerical values in parentheses represent their vapor pressures at 25°C (unit: Pa)). That is, the examples include diethylene glycol ethyl methyl ether (292.0), 3-methoxy-1-butanol (98.4), 3-methoxy-3-methylbutanol (90.0), 1-methyl-2-pyrrolidone (39.9), triethylene glycol dimethyl ether (29.9), 1,2-propanediol (27.2), 1,2-butanediol (19.7), ethylene glycol (12.8), diethylene glycol monoethyl ether (9.8), 1,2-pentanediol (7.7), 1,3-propanediol (4.6), 1,3-butanediol (7.2), 2-pyrrolidone (3.9), 2-methyl-1,3-propanediol (3.0), 1,2-hexanediol (2.6), 1,4-butanediol (1.9) and 3-methyl-1,5-pentanediol (1.9).

In addition, specific examples of the water-soluble organic solvent having a vapor pressure at 25°C of less than 1.9 Pa may include the following solvents (numerical values in parentheses represent their vapor pressures at 25°C (unit: Pa)). That is, the examples include diethylene glycol monobutyl ether (1.7), 1,5-pentanediol (1.0), 1,6-hexanediol (0.9), diethylene glycol (0.6), triethylene glycol (0.04), glycerin (0.03), trimethylolpropane, 1-(2-hydroxyethyl)-2-pyrrolidone, ethylene urea, tetraethylene glycol, a polyethylene glycol having a number-average molecular weight of from 200 to 1,000 and an ethylene oxide adduct of glycerin available under the product name "Liponic EG-07" (manufactured by Vantage).

The first water-soluble organic solvent has a LogP value at 25°C of -0.77 or less and a vapor pressure at 25°C of 1.9 Pa or more, and has, in its main chain, the chain hydrocarbon group having 2 or more to 4 or less carbon atoms. A chain hydrocarbon in the chain hydrocarbon group having 2 or more to 4 or less carbon atoms may be, for example, ethane, propane or butane. The chain hydrocarbon group having 2 or more to 4 or less carbon atoms is preferably a divalent chain hydrocarbon group. Of those, an ethylene group ($-CH_2CH_2-$), a trimethylene group ($-CH_2CH_2CH_2-$), a propylene group ($-CH(CH_3)CH_2-$) or a tetramethylene group ($-CH_2CH_2CH_2CH_2-$) is more preferable. The first water-soluble organic solvent has a structure in which any one of those chain hydrocarbon groups is used as a main chain and part of the group is

substituted with, for example, a hydroxy group serving as a hydrophilic group.

Examples of the first water-soluble organic solvent may include ethylene glycol, 1,3-propanediol, 1,2-propanediol and 1,4-butanediol. Of those, at least one kind selected from the group consisting of: 1,3-propanediol; 1,2-propanediol; and 1,4-butanediol is preferable. The first water-soluble organic solvents may be used alone or in combination thereof.

The content (% by mass) of the first water-soluble organic solvent in the ink is preferably 1.00% by mass or more to 50.00% by mass or less, more preferably 3.00% by mass or more to 40.00% by mass or less with respect to the total mass of the ink. In addition, the mass ratio of the content (% by mass) of the first water-soluble organic solvent to the content (% by mass) of the above-mentioned self-dispersible pigment, in which a group represented by the general formula (1) is bonded to the surface of the particle of the pigment, in the aqueous ink is preferably 1.5 times or more. When the above-mentioned mass ratio is 1.5 times or more, a color developability-improving effect is improved and hence excellent color developability is easily obtained. In addition, the above-mentioned mass ratio is preferably 10.0 times or less.

(Other Components)

A water-soluble organic compound that is a solid at normal temperature, for example, a polyhydric alcohol, such as trimethylolpropane or trimethylolethane, urea or a urea derivative such as ethylene urea, may be incorporated into the ink as required in addition to the above-mentioned components. Further, various additives, such as a pH adjuster, an antifoaming agent, a rust inhibitor, an antiseptic, an antifungal agent, an antioxidant, an anti-reducing agent and an evaporation accelerator, may each be incorporated into the ink as required. The ink may be free of a higher fatty acid or a salt thereof.

A surfactant may be incorporated into the ink. Examples of the kind of the surfactant may include an anionic surfactant, a nonionic surfactant and a cationic surfactant that are known. Those surfactants may be used alone or in combination thereof. Of those, a nonionic surfactant is preferably incorporated into the ink. Surfactants having various structures, such as hydrocarbon-based, silicone-based and fluorine-based structures, may each be utilized as the nonionic surfactant. Of those, a hydrocarbon-based nonionic surfactant is preferably used. When the surfactant is incorporated into the ink, the content (% by mass) of the surfactant in the ink is preferably 0.01% by mass or more to 5.00% by mass or less, more preferably 0.01% by mass or more to 3.00% by mass or less with respect to the total mass of the ink.

(Physical Properties of Ink)

[Dynamic Surface Tension]

The dynamic surface tension of the ink at 10 milliseconds is 52 mN/m or less. Thus, along with the wet spread of an ink droplet in a recording medium, the self-dispersible pigment in the ink droplet adsorbs to the surface of the recording medium. Accordingly, even when the amount of the liquid droplet is small, the recording medium can be efficiently covered with the pigment, and hence an image excellent in color developability can be recorded. In consideration of high-speed fixability, it is generally effective to design the ink so that the value of its dynamic surface tension may be low, to thereby quicken the diffusion of its liquid component. Meanwhile, however, the pigment is liable to sink into the recording medium, and hence the color developability of an image tends to reduce. The self-dispersible pigment in which the group represented by the general formula (1) is bonded to the surface of the particle of the pigment can suppress the reduction in color developability even when designed so as to have a low dynamic surface tension as described above.

From the viewpoint of the achievement of both the fixability of the ink and the color developability of an image, the dynamic surface tension of the ink at 10 milliseconds is more preferably 50 mN/m or less, still more preferably 48 mN/m or less. In addition, the dynamic surface tension of the ink at 10 milliseconds is preferably 32 mN/m or more. When the dynamic surface tension of the ink at 10 milliseconds is 32 mN/m or more, its pigment is suppressed from sinking into a recording medium, and hence the color developability is further improved with ease.

The dynamic surface tension of the ink is measured by a maximum bubble pressure method under the condition of 25°C. The maximum bubble pressure method is a method including: measuring the maximum pressure required for releasing bubbles generated at the distal end of a probe (capillary) immersed in a liquid to be measured; and determining the surface tension of the liquid from the measured maximum pressure. Specifically, the maximum pressure is measured while bubbles are continuously generated at the distal end of the probe. A time period from the time point when a new bubble surface appears at the distal end of the probe to the time point when the maximum bubble pressure (time point when the radius of curvature of the bubble becomes equal to the radius of the distal end portion of the probe) is reached is referred to as "lifetime". That is, the maximum bubble pressure method is a method including measuring the surface tension of a liquid in a state of motion. The dynamic surface tension of the ink at 10 milliseconds may be easily adjusted by, for example, the kinds and contents of the water-soluble organic solvent and the surfactant.

[Other Physical Properties]

From the viewpoint of the reliability of the ink serving as an ink to be applied to an ink jet system, the physical property values of the ink are preferably appropriately controlled. Specifically, the viscosity of the ink at 25°C is preferably 1.0 mPa·s or more to 10.0 mPa·s or less. In addition, the pH of the ink at 25°C is preferably 7.0 or more to 9.5 or less, more preferably 8.0 or more to 9.5 or less. The viscosity of the ink may be measured with a rotational viscometer or the like.

<Ink Cartridge>

An ink cartridge of the present disclosure includes an ink and an ink storage portion that stores the ink. In addition, the ink stored in the ink storage portion is the aqueous ink of the present disclosure described above. Fig. 1 is a sectional view for schematically illustrating an ink cartridge according to one embodiment of the present disclosure. As illustrated in Fig. 1, an ink supply port 12 for supplying an ink to a recording head is arranged on the bottom surface of the ink cartridge. The inside of the ink cartridge is the ink storage portion for storing the ink. The ink storage portion includes an ink storage chamber 14 and an absorbent storage chamber 16, and the chambers communicate to each other through a communication port 18. In addition, the absorbent storage chamber 16 communicates to the ink supply port 12. While a liquid ink 20 is stored in the ink storage chamber 14, absorbents 22 and 24 each of which holds the ink in a state of being impregnated therewith are stored in the absorbent storage chamber 16. The ink storage portion may be configured to be free of an ink storage chamber that stores the liquid ink and to hold the whole amount of the ink to be stored with the absorbents. In addition, the ink storage portion may be configured to be free of an absorbent and to store the whole amount of the ink in a liquid state. Further, an ink cartridge configured to include the ink storage portion and a recording head may be adopted.

<Ink Jet Recording Method>

An ink jet recording method of the present disclosure is a method including ejecting the aqueous ink of the present disclosure described above from a recording head of an ink jet system to record an image on a recording medium. A system of ejecting the ink is, for example, a system including applying mechanical energy to the ink or a system including applying thermal energy to the ink. In the present disclosure, the system including applying the thermal energy to the ink to eject the ink is particularly preferably adopted. The step of the ink jet recording method only needs to be a known step except that the ink of the present disclosure is used.

Fig. 2A and Fig. 2B are views for schematically illustrating an example of an ink jet recording apparatus to be used in the ink jet recording method of the present disclosure, in which Fig. 2A is a perspective view of the main portion of the ink jet recording apparatus and Fig. 2B is a perspective view of a head cartridge. A conveying unit (not shown) that conveys a recording medium 32 and a carriage shaft 34 are arranged in the ink jet recording apparatus. A head cartridge 36 may be mounted on the carriage shaft 34. The head cartridge 36 includes recording heads 38 and 40 and is formed so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

Fig. 3 is a schematic view for illustrating an example of the cleaning portion of the ink jet recording apparatus. The cleaning portion brings a cap 51 into abutment with the surface of each of the recording heads each having an ejection orifice to cover the ejection orifice. Thus, the evaporation of the ink can be suppressed. More specifically, capping is performed as follows: a cap holder 56 is raised by a vertically movable mechanism (not shown) to bring the cap 51 into abutment with the surface of the recording head having the ejection orifice at an appropriate adhesive force. When a pump 50 is activated under a state in which the capping is performed, a negative pressure is produced between the surface having the ejection orifice and the cap 51, and hence the ink is sucked from the ejection orifice. Thus, the cleaning of the recording head is performed. In addition, an ejection state can be recovered to a normal state by ejecting (preliminarily ejecting) the ink toward suction chambers 52 and 53. Further, when the ink present on the cap 51 is sucked through an outlet (not shown) under a state in which the cap 51 is separated from the surface of the recording head having the ejection orifice, the sticking of the ink to the recording head and any other harmful effect can be suppressed. An ink-absorbing member or the like may be arranged inside each of the suction chambers.

In Fig. 3, the following configuration has been described: a suction chamber formed by a peripheral wall portion 54 is divided into the two suction chambers 52 and 53 having the same volume by a partition wall 55. However, the volumes of those suction chambers may be different from each other, or the cleaning portion may include one suction chamber without any partition wall. Further, a configuration in which respective ejection orifice arrays that eject a plurality of kinds of inks are collectively covered with one cap may be adopted. Alternatively, a cap may be arranged for each of the ejection orifice arrays that eject the plurality of kinds of inks.

[Examples]

The present disclosure is described in more detail below by way of Examples and Comparative Examples. However, the present disclosure is by no means limited to Examples below, and various modifications are possible without departing from the gist of the present disclosure. In the description of the amounts of components, "part(s)" and "%" are by mass unless otherwise specified.

<Preparation of Pigment Dispersion Liquid>

(Anionic Group Amount)

To determine the anionic group amount of a self-dispersible pigment with high accuracy, a sample was purified prior to measurement. First, a pigment dispersion liquid was diluted so that the content of its pigment became about 5%. The diluted liquid was centrifuged with an ultracentrifuge (product name: "Optima MAX-XP", manufactured by Beckman Coulter, Inc.) under the conditions of 80,000 rpm and 2 hours. The sedimented pigment was redispersed in pure water having a volume 30 times as large as that of the pigment (on a mass basis) to prepare a measurement liquid. The anionic group amount of the self-dispersible pigment in the measurement liquid was measured by colloidal titration utilizing a potential difference. A potential difference automatic titration apparatus (product name: "AT-510", manufactured by Kyoto Electronics Manufacturing Co., Ltd.) mounted with a flow potential titration unit (PCD-500) was used in the measurement.

(Pigment Dispersion Liquids 1 to 20)

250.0 Grams of pure water, 30.0 g of a pigment shown in Table 1 and a treatment agent whose kind and amount (g) were shown in Table 1 were mixed to provide a mixed liquid. While the mixed liquid was cooled to 10°C and stirred, a 10% aqueous solution of potassium nitrite ($KNO_2$) whose amount (g) was shown in Table 1 was slowly added to the mixed liquid. The mixed liquid was stirred for 15 minutes, and was further stirred with a precision emulsifying and dispersing machine (product name: "CLEARMIX CLM-0.8S", manufactured by M Technique Co., Ltd.) at a number of revolutions of 10,000 rpm. A stirring time was set to a time period shown in Table 1. Next, an 8 mol/L aqueous solution of potassium hydroxide was added to the mixed liquid so that its pH became 10. The resultant was purified by ultrafiltration until the electric conductivity of a filtrate became 50 μS/cm or less. After the ultrafiltration, with regard to a pigment dispersion liquid whose "counter ion" shown in Table 1 was Na or $NH_4$, the counter ion of an anionic group was substituted by an ion exchange method. The purified product was centrifuged at a number of revolutions of 10,000 rpm for 30 minutes so that its coarse particle was removed. An appropriate amount of ion-exchanged water was added to the residue to adjust the content of the pigment. Thus, there were obtained pigment dispersion liquids 1 to 20, in each of which the content of the pigment was 10.0% and an anionic group amount was as shown in Table 1. The resultant pigment dispersion liquids 1 to 14 are each a pigment dispersion liquid containing a self-dispersible pigment in which a group represented by the general formula (1), the group having a counter ion ($M^1$ in the general formula (1)) whose kind is shown in Table 1, is bonded to the surface of the particle of the pigment. The abbreviations of the kinds of the pigments shown in Table 1 are as described below.

CB: carbon black
PB15:3: C.I. Pigment Blue 15:3
PR122: C.I. Pigment Red 122
PY74: C.I. Pigment Yellow 74

Table 1: Conditions for preparation of self-dispersible pigments and their characteristics

| Pigment dispersion liquid | Pigment | | Treatment agent | | 10% Aqueous solution of $KNO_2$ (g) | Stirring time (h) | Anionic group amount (mmol/g) | Counter ion |
|---|---|---|---|---|---|---|---|---|
| | Kind | Specific surface area ($m^2/g$) | Kind | Amount (g) | | | | |
| 1 | CB | 260 | 2-Aminoterephthalic acid | 4.8 | 37.6 | 5 | 0.16 | K |
| 2 | CB | 260 | 2-Aminoterephthalic acid | 4.8 | 37.6 | 5 | 0.16 | Na |
| 3 | CB | 260 | 2-Aminoterephthalic acid | 4.8 | 37.6 | 5 | 0.16 | $NH_4$ |

(continued)

| Pigment dispersion liquid | Pigment | | Treatment agent | | 10% Aqueous solution of $KNO_2$ (g) | Stirring time (h) | Anionic group amount (mmol/g) | Counter ion |
|---|---|---|---|---|---|---|---|---|
| | Kind | Specific surface area ($m^2/g$) | Kind | Amount (g) | | | | |
| 4 | PB15:3 | 90 | 2-Aminoterephthalic acid | 4.8 | 37.6 | 5 | 0.14 | K |
| 5 | PR122 | 130 | 2-Aminoterephthalic acid | 4.8 | 37.6 | 5 | 0.14 | K |
| 6 | PY74 | 60 | 2-Aminoterephthalic acid | 4.8 | 37.6 | 5 | 0.13 | K |
| 7 | CB | 180 | 2-Aminoterephthalic acid | 3.6 | 28.2 | 5 | 0.16 | K |
| 8 | CB | 200 | 2-Aminoterephthalic acid | 4.5 | 35.2 | 5 | 0.16 | K |
| 9 | CB | 260 | 2-Aminoterephthalic acid | 1.9 | 14.9 | 6 | 0.07 | K |
| 10 | CB | 260 | 2-Aminoterephthalic acid | 2.2 | 17.0 | 6 | 0.09 | K |
| 11 | CB | 260 | 2-Aminoterephthalic acid | 10.9 | 85.1 | 5 | 0.20 | K |
| 12 | CB | 260 | 2-Aminoterephthalic acid | 16.3 | 127.7 | 6 | 0.22 | K |
| 13 | CB | 180 | 2-Aminoterephthalic acid | 12.0 | 94.0 | 6 | 0.22 | $NH_4$ |
| 14 | CB | 180 | 2-Aminoterephthalic acid | 1.5 | 11.8 | 6 | 0.07 | K |
| 15 | CB | 260 | 4-Aminophthalic acid | 5.4 | 42.6 | 4 | 0.24 | K |
| 16 | CB | 260 | 4-Aminophthalic acid | 2.7 | 21.3 | 4 | 0.20 | K |
| 17 | CB | 260 | 4-Aminobenzoic acid | 4.1 | 127.7 | 5 | 0.20 | K |
| 18 | CB | 260 | 4-Aminosalicylic acid | 4.6 | 127.7 | 5 | 0.20 | K |
| 19 | CB | 260 | 4-Aminobenzenesulfonic acid | 5.2 | 42.6 | 5 | 0.20 | K |
| 20 | CB | 260 | 5-Amino-1,2,3-benzenetricarboxylic acid | 6.8 | 42.6 | 5 | 0.24 | K |

(Pigment Dispersion Liquid 21)

20.0 Grams of carbon black (specific surface area: 260 $m^2/g$), 3.9 mmol of ((4-aminobenzoylamino)-methane-1,1-diyl)bisphosphonic acid monosodium salt, 11.1 mmol of nitric acid and 200 mL of pure water were mixed at room temperature with a Silverson mixer (6,000 rpm). 30 Minutes after that, an aqueous solution obtained by dissolving 11.1 mmol of sodium nitrite in a small amount of water was slowly added to the resultant mixture. The addition of the aqueous solution caused the temperature of the mixture to reach 60°C. The mixture was subjected to a reaction at a temperature of 60°C for 1 hour. After that, the pH of the mixture was adjusted to 10 with a 1.0 mol/L aqueous solution of potassium hydroxide. 30 Minutes after that, 20.00 mL of water was added to the mixture, and the removal of a low-molecular weight product and desalting were performed with a spectrum membrane. After that, a dispersion liquid was prepared by diluting the mixed liquid with water so that the content of the pigment became 10.0%. Thus, there was obtained a pigment dispersion liquid 21 in which a ((4-aminobenzoylamino)-methane-1,1-diyl)bisphosphonic acid group whose counter ion was potassium was introduced into the surface of the particle of the carbon black. The pigment dispersion liquid had an anionic group amount of 0.18 mmol/g.

(Pigment Dispersion Liquid 22)

A pigment dispersion liquid 22 containing a self-dispersible pigment was prepared by using 5-aminobenzene-1,2,3-tricarboxylic acid as a treatment agent in conformity with the description of Example 2 of Japanese Patent Laid-Open No. 2009-506196. The content of the pigment in the pigment dispersion liquid 22 was 15.0%.

(Pigment Dispersion Liquid 23)

A pigment dispersion liquid 23 containing a self-dispersible pigment was prepared by using [(4-aminophenyl)(hydroxyl)methylene]bisphosphonic acid monosodium salt as a treatment agent in conformity with the description of Example 10 of Japanese Patent Laid-Open No. 2009-515007. The content of the pigment in the pigment dispersion liquid 23 was 12.0%.

(Pigment Dispersion Liquid 24)

A pigment dispersion liquid 24 containing a self-dispersible pigment was prepared by using 4-aminophthalic acid as a treatment agent in conformity with the description of the preparation of the pigment dispersion liquid B of Japanese Patent Laid-Open No. 2006-045514. The content of the pigment in the pigment dispersion liquid 24 was 10.0%.

<Synthesis of Resin>

(Aqueous Solution of Acrylic Resin)

60.0 Parts of styrene, 21.0 parts of n-butyl acrylate and 19.0 parts of acrylic acid were copolymerized by an ordinary method to synthesize an acrylic resin that was a random copolymer. Potassium hydroxide whose molar amount was equal to the acid value of the resin was added to the resin. Further, an appropriate amount of pure water was added to the mixture to prepare an aqueous solution of the acrylic resin, which contained the acrylic resin having an acid value of 148 mgKOH/g and a weight-average molecular weight of 10,000, and in which the content of the resin (solid content) was 20.0%.

(Aqueous Solution of Urethane Resin)

39.3 Grams of a polytetramethylene glycol having a number-average molecular weight of 2,000, 44.5 g of isophorone diisocyanate and 0.007 g of dibutyltin dilaurate were loaded into a four-necked flask including a temperature gauge, a stirring machine, a nitrogen-introducing tube and a cooling tube. The materials were caused to react with each other under a nitrogen gas atmosphere at a temperature of 100°C for 5 hours, and then the resultant was cooled to a temperature of 65°C or less. 13.2 Grams of dimethylolpropionic acid, 3.0 g of neopentyl glycol and 150.0 g of methyl ethyl ketone were added to the cooled product, and the mixture was subjected to a reaction at a temperature of 80°C. After that, the resultant was cooled to a temperature of 40°C, and 20.0 g of methanol was added thereto to stop the reaction. Next, an appropriate amount of ion-exchanged water was added to the mixture, and while the whole was stirred with a homomixer, an aqueous solution of potassium hydroxide required for the neutralization of a resin was added thereto. After that, methyl ethyl ketone and unreacted methanol were evaporated under heating and reduced pressure. Thus, an aqueous solution of a urethane resin, which contained the urethane resin having an acid value of 55 mgKOH/g and a weight-average molecular weight of 15,000, and in which the content of the resin (solid content) was 20.0%, was prepared.

<Preparation of Compound represented by General Formula (2)>

Compounds having structures shown in Table 2 were prepared as specific examples of the compound represented by the general formula (2). Those compounds are each obtained by neutralizing each of the carboxylic acid groups of 2-hydroxyterephthalic acid or 2-nitroterephthalic acid commercially available as a reagent with a neutralizer shown in Table 2 to turn the group into a salt form.

Table 2: Compound represented by general formula (2)

| Compound | Substance name | Neutralizer | $R^1$ | $M^2$ |
|---|---|---|---|---|
| 1 | Dipotassium 2-hydroxyterephthalate | Potassium hydroxide | OH | K |
| 2 | Disodium 2-hydroxyterephthalate | Sodium hydroxide | OH | Na |
| 3 | Diammonium 2-hydroxyterephthalate | Ammonia water | OH | $NH_4$ |
| 4 | Dipotassium 2-nitroterephthalate | Potassium hydroxide | $NO_2$ | K |
| 5 | Disodium 2-nitroterephthalate | Sodium hydroxide | $NO_2$ | Na |
| 6 | Diammonium 2-nitroterephthalate | Ammonia water | $NO_2$ | $NH_4$ |

<Preparation of Ink>

Respective components (unit: %) shown in the middle section of Table 3 (Table 3-1 to Table 3-6) and the compounds 1 to 6 were mixed so that the concentrations of the compounds became values shown in the lower section thereof, followed by sufficient stirring. After that, the mixtures were filtered under pressure with a membrane filter having a pore size of 2.5 μm (product name: "HDCII FILTER", manufactured by Pall Corporation) to prepare respective inks. Pigment dispersion liquids whose kinds (numbers) were shown in the upper section of Table 3 were used as pigment dispersion liquids shown in the middle section of Table 3. Numerical values in parentheses for a water-soluble organic solvent represent a LogP value at 25°C and a vapor pressure (unit: Pa is omitted) at 25°C. However, the vapor pressure of a component that is a solid at 25°C is represented as "-". A numerical value attached to the polyethylene glycol represents its number-average molecular weight. The terms "ACETYLENOL E60" and "ACETYLENOL E100" each refer to the product name of a nonionic surfactant (ethylene oxide adduct of acetylene glycol) manufactured by Kawaken Fine Chemicals Co., Ltd. The term "SURFYNOL 465" refers to the product name of a nonionic surfactant (ethylene oxide adduct of acetylene glycol) manufactured by Nissin Chemical Co., Ltd. The usage amount of ion-exchanged water shown in the middle section of Table 3 includes the usage amount of each of the compounds 1 to 6 used at the time of the ink preparation. The characteristics of the inks are shown in the lower section of Table 3. The dynamic surface tension of each of the inks at 10 milliseconds was measured with a dynamic surface tensiometer based on a maximum bubble pressure method (product name: "BUBBLE PRESSURE TENSIOMETER BP-2", manufactured by KRUSS Scientific) under the condition of 25°C.

Table 3-1: Compositions and characteristics of inks

| | Example | | | | | | | |
|---|---|---|---|---|---|---|---|---|
| | 1 | 2 | 3 | 4 | 5 | 6 | 7 | 8 |
| Kind (number) of pigment dispersion liquid | 1 | 2 | 3 | 1 | 1 | 1 | 4 | 5 |
| Pigment dispersion liquid | 40.00 | 40.00 | 40.00 | 40.00 | 40.00 | 40.00 | 40.00 | 40.00 |
| Aqueous solution of acrylic resin | 1.00 | 1.00 | 1.00 | 1.00 | 1.00 | 1.00 | 1.00 | 1.00 |
| Aqueous solution of urethane resin | 1.50 | 1.50 | 1.50 | 1.50 | 1.50 | 1.50 | 1.50 | 1.50 |
| Glycerin (-1.85, 0.03) | 8.00 | 8.00 | 8.00 | 8.00 | 8.00 | 8.00 | 8.00 | 8.00 |
| Triethylene glycol (-1.65, 0.04) | 5.00 | 5.00 | 5.00 | 5.00 | 5.00 | 5.00 | 5.00 | 5.00 |
| 1,2-Hexanediol (0.52, 2.6) | | | | 1.00 | | 0.60 | | |
| 1,3-Propanediol(-1.09, 4.6) | | | | | | | | |
| 1,2-Propanediol (-1.01, 27.2) | | | | | | | | |
| 1,4-Butanediol (-0.77, 1.9) | | | | | | | | |
| 1,5-Pentanediol (-0.56, 1.0) | | | | | | | | |
| 2-Pyrrolidone (-1.09, 3.9) | | | | | | | | |
| Trimethylolpropane (-1.07, -) | | | | | | | | |
| Polyethylene glycol 600 (-2.82, -) | | | | | | | | |
| ACETYLENOL E60 | 0.05 | 0.05 | 0.05 | 0.40 | 0.015 | | 0.05 | 0.05 |
| SURFYNOL 465 | | | | | | | | |
| ACETYLENOL E100 | | | | | | | | |
| Ion-exchanged water | 44.45 | 44.45 | 44.45 | 43.10 | 44.485 | 43.90 | 44.45 | 44.45 |
| Dynamic surface tension γ (mN/m) | 48 | 48 | 48 | 32 | 52 | 52 | 48 | 48 |
| Content P of self-dispersible pigment having group represented by general formula (1) (%) | 4.00 | 4.00 | 4.00 | 4.00 | 4.00 | 4.00 | 4.00 | 4.00 |
| Concentration of compound 1 (mmol/kg) | 0.800 | 0.800 | 0.800 | 0.800 | 0.800 | 0.800 | 0.800 | 0.800 |

(continued)

| | Example | | | | | | | |
|---|---|---|---|---|---|---|---|---|
| | 1 | 2 | 3 | 4 | 5 | 6 | 7 | 8 |
| Concentration of compound 2 (mmol/kg) | | | | | | | | |
| Concentration of compound 3 (mmol/kg) | | | | | | | | |
| Concentration of compound 4 (mmol/kg) | 0.200 | 0.200 | 0.200 | 0.200 | 0.200 | 0.200 | 0.200 | 0.200 |
| Concentration of compound 5 (mmol/kg) | | | | | | | | |
| Concentration of compound 6 (mmol/kg) | | | | | | | | |
| Content C of compound represented by general formula (2) (mmol/kg) | 1.000 | 1.000 | 1.000 | 1.000 | 1.000 | 1.000 | 1.000 | 1.000 |
| Content $C_1$ of compound represented by general formula (2) in which $R^1$ represents hydroxy group (mmol/kg) | 0.800 | 0.800 | 0.800 | 0.800 | 0.800 | 0.800 | 0.800 | 0.800 |
| Value of C/P (mmol/kg·%) | 0.250 | 0.250 | 0.250 | 0.250 | 0.250 | 0.250 | 0.250 | 0.250 |
| Value of $C_1$/C (times) | 0.80 | 0.80 | 0.80 | 0.80 | 0.80 | 0.80 | 0.80 | 0.80 |

Table 3-2: Compositions and characteristics of inks

| | Example | | | | | | | |
|---|---|---|---|---|---|---|---|---|
| | 9 | 10 | 11 | 12 | 13 | 14 | 15 | 16 |
| Kind (number) of pigment dispersion liquid | 6 | 7 | 8 | 9 | 10 | 11 | 12 | 1 |
| Pigment dispersion liquid | 40.00 | 40.00 | 40.00 | 40.00 | 40.00 | 40.00 | 40.00 | 40.00 |
| Aqueous solution of acrylic resin | 1.00 | 1.00 | 1.00 | 1.00 | 1.00 | 1.00 | 1.00 | 1.00 |
| Aqueous solution of urethane resin | 1.50 | 1.50 | 1.50 | 1.50 | 1.50 | 1.50 | 1.50 | 1.50 |
| Glycerin (-1.85, 0.03) | 8.00 | 8.00 | 8.00 | 8.00 | 8.00 | 8.00 | 8.00 | 8.00 |
| Triethylene glycol (-1.65, 0.04) | 5.00 | 5.00 | 5.00 | 5.00 | 5.00 | 5.00 | 5.00 | 5.00 |
| 1,2-Hexanediol (0.52, 2.6) | | | | | | | | |
| 1,3-Propanediol(-1.09, 4.6) | | | | | | | | |
| 1,2-Propanediol (-1.01, 27.2) | | | | | | | | |
| 1,4-Butanediol (-0.77, 1.9) | | | | | | | | |
| 1,5-Pentanediol (-0.56, 1.0) | | | | | | | | |
| 2-Pyrrolidone (-1.09, 3.9) | | | | | | | | |
| Trimethylolpropane (-1.07, -) | | | | | | | | |
| Polyethylene glycol 600 (-2.82, -) | | | | | | | | |
| ACETYLENOL E60 | 0.05 | 0.05 | 0.05 | 0.05 | 0.05 | 0.05 | 0.05 | 0.05 |
| SURFYNOL 465 | | | | | | | | |
| ACETYLENOL E100 | | | | | | | | |
| Ion-exchanged water | 44.45 | 44.45 | 44.45 | 44.45 | 44.45 | 44.45 | 44.45 | 44.45 |

(continued)

| | Example | | | | | | | |
|---|---|---|---|---|---|---|---|---|
| | 9 | 10 | 11 | 12 | 13 | 14 | 15 | 16 |
| Dynamic surface tension γ (mN/m) | 48 | 48 | 48 | 48 | 48 | 48 | 48 | 48 |
| Content P of self-dispersible pigment having group represented by general formula (1) (%) | 4.00 | 4.00 | 4.00 | 4.00 | 4.00 | 4.00 | 4.00 | 4.00 |
| Concentration of compound 1 (mmol/kg) | 0.800 | 0.800 | 0.800 | 0.800 | 0.800 | 0.800 | 0.800 | |
| Concentration of compound 2 (mmol/kg) | | | | | | | | |
| Concentration of compound 3 (mmol/kg) | | | | | | | | |
| Concentration of compound 4 (mmol/kg) | 0.200 | 0.200 | 0.200 | 0.200 | 0.200 | 0.200 | 0.200 | |
| Concentration of compound 5 (mmol/kg) | | | | | | | | |
| Concentration of compound 6 (mmol/kg) | | | | | | | | |
| Content C of compound represented by general formula (2) (mmol/kg) | 1.000 | 1.000 | 1.000 | 1.000 | 1.000 | 1.000 | 1.000 | 0.000 |
| Content $C_1$ of compound represented by general formula (2) in which $R^1$ represents hydroxy group (mmol/kg) | 0.800 | 0.800 | 0.800 | 0.800 | 0.800 | 0.800 | 0.800 | 0.000 |
| Value of C/P (mmol/kg·%) | 0.250 | 0.250 | 0.250 | 0.250 | 0.250 | 0.250 | 0.250 | 0.000 |
| Value of $C_1$/C (times) | 0.80 | 0.80 | 0.80 | 0.80 | 0.80 | 0.80 | 0.80 | - |

Table 3-3: Compositions and characteristics of inks

| | Example | | | | | | | |
|---|---|---|---|---|---|---|---|---|
| | 17 | 18 | 19 | 20 | 21 | 22 | 23 | 24 |
| Kind (number) of pigment dispersion liquid | 1 | 1 | 1 | 1 | 1 | 1 | 1 | 1 |
| Pigment dispersion liquid | 40.00 | 40.00 | 40.00 | 40.00 | 40.00 | 40.00 | 40.00 | 40.00 |
| Aqueous solution of acrylic resin | 1.00 | 1.00 | 1.00 | 1.00 | 1.00 | 1.00 | 1.00 | 1.00 |
| Aqueous solution of urethane resin | 1.50 | 1.50 | 1.50 | 1.50 | 1.50 | 1.50 | 1.50 | 1.50 |
| Glycerin (-1.85, 0.03) | 8.00 | 8.00 | 8.00 | 8.00 | 8.00 | 8.00 | 8.00 | 8.00 |
| Triethylene glycol (-1.65, 0.04) | 5.00 | 5.00 | 5.00 | 5.00 | 5.00 | 5.00 | 5.00 | 5.00 |
| 1,2-Hexanediol (0.52, 2.6) | | | | | | | | |
| 1,3-Propanediol(-1.09, 4.6) | | | | | | | | |
| 1,2-Propanediol (-1.01, 27.2) | | | | | | | | |
| 1,4-Butanediol (-0.77, 1.9) | | | | | | | | |
| 1,5-Pentanediol (-0.56, 1.0) | | | | | | | | |
| 2-Pyrrolidone (-1.09, 3.9) | | | | | | | | |

(continued)

| | Example | | | | | | | |
|---|---|---|---|---|---|---|---|---|
| | 17 | 18 | 19 | 20 | 21 | 22 | 23 | 24 |
| Trimethylolpropane (-1.07, -) | | | | | | | | |
| Polyethylene glycol 600 (-2.82, -) | | | | | | | | |
| ACETYLENOL E60 | 0.05 | 0.05 | 0.05 | 0.05 | 0.05 | 0.05 | 0.05 | 0.05 |
| SURFYNOL 465 | | | | | | | | |
| ACETYLENOL E100 | | | | | | | | |
| Ion-exchanged water | 44.45 | 44.45 | 44.45 | 44.45 | 44.45 | 44.45 | 44.45 | 44.45 |
| Dynamic surface tension $\gamma$ (mN/m) | 48 | 48 | 48 | 48 | 48 | 48 | 48 | 48 |
| Content P of self-dispersible pigment having group represented by general formula (1) (%) | 4.00 | 4.00 | 4.00 | 4.00 | 4.00 | 4.00 | 4.00 | 4.00 |
| Concentration of compound 1 (mmol/kg) | | | 0.024 | 0.032 | 9.600 | 10.240 | 0.080 | 0.096 |
| Concentration of compound 2 (mmol/kg) | 0.800 | | | | | | | |
| Concentration of compound 3 (mmol/kg) | | 0.800 | | | | | | |
| Concentration of compound 4 (mmol/kg) | | | 0.006 | 0.008 | 2.400 | 2.560 | 0.020 | 0.024 |
| Concentration of compound 5 (mmol/kg) | 0.200 | | | | | | | |
| Concentration of compound 6 (mmol/kg) | | 0.200 | | | | | | |
| Content C of compound represented by general formula (2) (mmol/kg) | 1.000 | 1.000 | 0.030 | 0.040 | 12.000 | 12.800 | 0.100 | 0.120 |
| Content $C_1$ of compound represented by general formula (2) in which $R^1$ represents hydroxy group (mmol/kg) | 0.800 | 0.800 | 0.024 | 0.032 | 9.600 | 10.240 | 0.080 | 0.096 |
| Value of C/P (mmol/kg·%) | 0.250 | 0.250 | 0.008 | 0.010 | 3.000 | 3.200 | 0.025 | 0.030 |
| Value of $C_1$/C (times) | 0.80 | 0.80 | 0.80 | 0.80 | 0.80 | 0.80 | 0.80 | 0.80 |

Table 3-4: Compositions and characteristics of inks

| | Example | | | | | | | |
|---|---|---|---|---|---|---|---|---|
| | 25 | 26 | 27 | 28 | 29 | 30 | 31 | 32 |
| Kind (number) of pigment dispersion liquid | 1 | 1 | 1 | 1 | 1 | 1 | 13 | 14 |
| Pigment dispersion liquid | 40.00 | 40.00 | 40.00 | 40.00 | 40.00 | 40.00 | 40.00 | 40.00 |
| Aqueous solution of acrylic resin | 1.00 | 1.00 | 1.00 | 1.00 | 1.00 | 1.00 | 1.00 | 1.00 |
| Aqueous solution of urethane resin | 1.50 | 1.50 | 1.50 | 1.50 | 1.50 | 1.50 | 1.50 | 1.50 |

(continued)

| | Example | | | | | | | |
|---|---|---|---|---|---|---|---|---|
| | 25 | 26 | 27 | 28 | 29 | 30 | 31 | 32 |
| Glycerin (-1.85, 0.03) | 8.00 | 8.00 | 8.00 | 8.00 | 8.00 | 8.00 | 8.00 | 8.00 |
| Triethylene glycol (-1.65, 0.04) | 5.00 | 5.00 | 5.00 | 5.00 | 5.00 | 5.00 | 5.00 | 5.00 |
| 1,2-Hexanediol (0.52, 2.6) | | | | | | | | |
| 1,3-Propanediol(-1.09, 4.6) | | | | | | | | |
| 1,2-Propanediol (-1.01, 27.2) | | | | | | | | |
| 1,4-Butanediol (-0.77, 1.9) | | | | | | | | |
| 1,5-Pentanediol (-0.56, 1.0) | | | | | | | | |
| 2-Pyrrolidone (-1.09, 3.9) | | | | | | | | |
| Trimethylolpropane (-1.07, -) | | | | | | | | |
| Polyethylene glycol 600 (-2.82, -) | | | | | | | | |
| ACETYLENOL E60 | 0.05 | 0.05 | 0.05 | 0.05 | 0.05 | 0.05 | 0.05 | 0.05 |
| SURFYNOL 465 | | | | | | | | |
| ACETYLENOL E100 | | | | | | | | |
| Ion-exchanged water | 44.45 | 44.45 | 44.45 | 44.45 | 44.45 | 44.45 | 44.45 | 44.45 |
| Dynamic surface tension $\gamma$ (mN/m) | 48 | 48 | 48 | 48 | 48 | 48 | 48 | 48 |
| Content P of self-dispersible pigment having group represented by general formula (1) (%) | 4.00 | 4.00 | 4.00 | 4.00 | 4.00 | 4.00 | 4.00 | 4.00 |
| Concentration of compound 1 (mmol/kg) | 6.400 | 7.200 | 0.550 | 0.600 | 0.950 | 0.970 | | |
| Concentration of compound 2 (mmol/kg) | | | | | | | | |
| Concentration of compound 3 (mmol/kg) | | | | | | | | |
| Concentration of compound 4 (mmol/kg) | 1.600 | 1.800 | 0.450 | 0.400 | 0.050 | 0.030 | | |
| Concentration of compound 5 (mmol/kg) | | | | | | | | |
| Concentration of compound 6 (mmol/kg) | | | | | | | | |
| Content C of compound represented by general formula (2) (mmol/kg) | 8.000 | 9.000 | 1.000 | 1.000 | 1.000 | 1.000 | 0.000 | 0.000 |
| Content $C_1$ of compound represented by general formula (2) in which $R^1$ represents hydroxy group (mmol/kg) | 6.400 | 7.200 | 0.550 | 0.600 | 0.950 | 0.970 | 0.000 | 0.000 |
| Value of C/P (mmol/kg·%) | 2.000 | 2.250 | 0.250 | 0.250 | 0.250 | 0.250 | 0.000 | 0.000 |
| Value of $C_1$/C (times) | 0.80 | 0.80 | 0.55 | 0.60 | 0.95 | 0.97 | - | - |

Table 3-5: Compositions and characteristics of inks

| | Example | | | Comparative Example | | | | |
|---|---|---|---|---|---|---|---|---|
| | 33 | 34 | 35 | 1 | 2 | 3 | 4 | 5 |
| Kind (number) of pigment dispersion liquid | 1 | 1 | 1 | 15 | 16 | 17 | 18 | 19 |
| Pigment dispersion liquid | 40.00 | 40.00 | 40.00 | 40.00 | 40.00 | 40.00 | 40.00 | 40.00 |
| Aqueous solution of acrylic resin | 1.00 | 1.00 | 1.00 | 1.00 | 1.00 | 1.00 | 1.00 | 1.00 |
| Aqueous solution of urethane resin | 1.50 | 1.50 | 1.50 | 1.50 | 1.50 | 1.50 | 1.50 | 1.50 |
| Glycerin (-1.85, 0.03) | | | | 8.00 | 8.00 | 8.00 | 8.00 | 8.00 |
| Triethylene glycol (-1.65, 0.04) | | | | 5.00 | 5.00 | 5.00 | 5.00 | 5.00 |
| 1,2-Hexanediol (0.52, 2.6) | | | | | | | | |
| 1,3-Propanediol(-1.09, 4.6) | 13.00 | | | | | | | |
| 1,2-Propanediol (-1.01, 27.2) | | 13.00 | | | | | | |
| 1,4-Butanediol (-0.77, 1.9) | | | 13.00 | | | | | |
| 1,5-Pentanediol (-0.56, 1.0) | | | | | | | | |
| 2-Pyrrolidone (-1.09, 3.9) | | | | | | | | |
| Trimethylolpropane (-1.07, -) | | | | | | | | |
| Polyethylene glycol 600 (-2.82, -) | | | | | | | | |
| ACETYLENOL E60 | 0.05 | | 0.02 | 0.05 | 0.05 | 0.05 | 0.05 | 0.05 |
| SURFYNOL 465 | | | | | | | | |
| ACETYLENOL E100 | | | | | | | | |
| Ion-exchanged water | 44.45 | 44.50 | 44.48 | 44.45 | 44.45 | 44.45 | 44.45 | 44.45 |
| Dynamic surface tension $\gamma$ (mN/m) | 47 | 37 | 47 | 47 | 47 | 48 | 47 | 48 |
| Content P of self-dispersible pigment having group represented by general formula (1) (%) | 4.00 | 4.00 | 4.00 | 0.00 | 0.00 | 0.00 | 0.00 | 0.00 |
| Concentration of compound 1 (mmol/kg) | 0.800 | 0.800 | 0.800 | 0.800 | 0.800 | 0.800 | 0.800 | 0.800 |
| Concentration of compound 2 (mmol/kg) | | | | | | | | |
| Concentration of compound 3 (mmol/kg) | | | | | | | | |
| Concentration of compound 4 (mmol/kg) | 0.200 | 0.200 | 0.200 | 0.200 | 0.200 | 0.200 | 0.200 | 0.200 |
| Concentration of compound 5 (mmol/kg) | | | | | | | | |
| Concentration of compound 6 (mmol/kg) | | | | | | | | |
| Content C of compound represented by general formula (2) (mmol/kg) | 1.000 | 1.000 | 1.000 | 1.000 | 1.000 | 1.000 | 1.000 | 1.000 |
| Content $C_1$ of compound represented by general formula (2) in which $R^1$ represents hydroxy group (mmol/kg) | 0.800 | 0.800 | 0.800 | 0.800 | 0.800 | 0.800 | 0.800 | 0.800 |

(continued)

| | Example | | | Comparative Example | | | | |
|---|---|---|---|---|---|---|---|---|
| | 33 | 34 | 35 | 1 | 2 | 3 | 4 | 5 |
| Value of C/P (mmol/kg·%) | 0.250 | 0.250 | 0.250 | - | - | - | - | - |
| Value of $C_1$/C (times) | 0.80 | 0.80 | 0.80 | 0.80 | 0.80 | 0.80 | 0.80 | 0.80 |

Table 3-6: Compositions and characteristics of inks

| | Comparative Example | | | | | | | |
|---|---|---|---|---|---|---|---|---|
| | 6 | 7 | 8 | 9 | 10 | 11 | 12 | 13 |
| Kind (number) of pigment dispersion liquid | 20 | 21 | 1 | 16 | 20 | 22 | 23 | 24 |
| Pigment dispersion liquid | 40.00 | 40.00 | 40.00 | 40.00 | 40.00 | 26.70 | 33.30 | 50.00 |
| Aqueous solution of acrylic resin | 1.00 | 1.00 | 1.00 | 1.00 | 1.00 | | | |
| Aqueous solution of urethane resin | 1.50 | 1.50 | 1.50 | 1.50 | 1.50 | | | |
| Glycerin (-1.85, 0.03) | 8.00 | 8.00 | 8.00 | 8.00 | 8.00 | | | 5.00 |
| Triethylene glycol (-1.65, 0.04) | 5.00 | 5.00 | 5.00 | 5.00 | 5.00 | | | |
| 1,2-Hexanediol (0.52, 2.6) | | | | | | | | |
| 1,3-Propanediol(-1.09, 4.6) | | | | | | | | |
| 1,2-Propanediol (-1.01, 27.2) | | | | | | | | |
| 1,4-Butanediol (-0.77, 1.9) | | | | | | | | |
| 1,5-Pentanediol (-0.56, 1.0) | | | | | | 7.00 | 7.00 | |
| 2-Pyrrolidone (-1.09, 3.9) | | | | | | 7.00 | 7.00 | |
| Trimethylolpropane (-1.07, -) | | | | | | 5.00 | 5.00 | |
| Polyethylene glycol 600 (-2.82, -) | | | | | | | | 15.00 |
| ACETYLENOL E60 | 0.05 | 0.05 | 0.01 | 0.01 | 0.01 | | | |
| SURFYNOL 465 | | | | | | 0.20 | 2.00 | |
| ACETYLENOL E100 | | | | | | | | 0.10 |
| Ion-exchanged water | 44.45 | 44.45 | 44.49 | 44.49 | 44.49 | 54.10 | 45.70 | 29.90 |
| Dynamic surface tension $\gamma$ (mN/m) | 48 | 47 | 54 | 53 | 54 | 46 | 34 | 52 |
| Content P of self-dispersible pigment having group represented by general formula (1) (%) | 0.00 | 0.00 | 4.00 | 0.00 | 0.00 | 0.00 | 0.00 | 0.00 |
| Concentration of compound 1 (mmol/kg) | 0.800 | 0.800 | 0.800 | 0.800 | 0.800 | | | |
| Concentration of compound 2 (mmol/kg) | | | | | | | | |
| Concentration of compound 3 (mmol/kg) | | | | | | | | |
| Concentration of compound 4 (mmol/kg) | 0.200 | 0.200 | 0.200 | 0.200 | 0.200 | | | |
| Concentration of compound 5 (mmol/kg) | | | | | | | | |
| Concentration of compound 6 (mmol/kg) | | | | | | | | |

(continued)

| | Comparative Example | | | | | | | |
|---|---|---|---|---|---|---|---|---|
| | 6 | 7 | 8 | 9 | 10 | 11 | 12 | 13 |
| Content C of compound represented by general formula (2) (mmol/kg) | 1.000 | 1.000 | 1.000 | 1.000 | 1.000 | 0.000 | 0.000 | 0.000 |
| Content $C_1$ of compound represented by general formula (2) in which $R^1$ represents hydroxy group (mmol/kg) | 0.800 | 0.800 | 0.800 | 0.800 | 0.800 | 0.000 | 0.000 | 0.000 |
| Value of C/P (mmol/kg·%) | - | - | 0.250 | - | - | - | - | - |
| Value of $C_1$/C (times) | 0.80 | 0.80 | 0.80 | 0.80 | 0.80 | - | - | - |

<Evaluation>

Each of the inks obtained in the foregoing was loaded into an ink cartridge, and the ink cartridge was mounted at the position of the BK ink of an ink jet recording apparatus (product name: "Maxify iB4130", manufactured by CANON KABUSHIKI KAISHA) that ejected the ink from a recording head through the action of thermal energy. In this Example, a solid image recorded by applying 23.4 ng of the ink to a unit region measuring 1/600 inch by 1/600 inch is defined as "having a recording duty of 100%." In this Example, in the following evaluation criteria, levels "AA", "A" and "B" were defined as acceptable levels, and levels "C", "D" and "E" were defined as unacceptable levels. The evaluation results are shown in Table 4.

(Color Developability)

A solid image (2 cm×2 cm) having a recording duty of 75% was recorded on each of the following two kinds of recording media (plain paper) with the above-mentioned ink jet recording apparatus. One day after the recording, the optical density of the solid image was measured with a fluorescence spectrodensitometer (product name: "FD-7", manufactured by Konica Minolta, Inc.) under the conditions of an illumination condition of M1 (D50), an observation light source of D50 and a field of view of 2°. The color developability of the image was evaluated based on the average of the resultant optical densities in the recording media in accordance with the following evaluation criteria.

[Recording Medium]

·Product name: "Office 70" (manufactured by CANON KABUSHIKI KAISHA)
·Product name: "npi high-quality paper" (manufactured by Nippon Paper Industries Co., Ltd.)

[Black Ink]

AA: The average of the optical densities was 1.34 or more.
A: The average of the optical densities was 1.29 or more to less than 1.34.
B: The average of the optical densities was 1.24 or more to less than 1.29.
C: The average of the optical densities was 1.14 or more to less than 1.24.
D: The average of the optical densities was 1.04 or more to less than 1.14.
E: The average of the optical densities was 0.94 or more to less than 1.04.

[Color Ink]

A: The average of the optical densities was 1.03 or more.
B: The average of the optical densities was 0.98 or more to less than 1.03.
C: The average of the optical densities was 0.93 or more to less than 0.98.
D: The average of the optical densities was less than 0.93.

(Deposition Suppression)

To recognize that an ink had sufficient performance even under such a condition that the ink was concentrated and hence its deposition was liable to occur, a liquid (concentrated ink) obtained by evaporating 10% by mass of each of the inks obtained in the foregoing was prepared. A black solid image having a recording duty of 10% was recorded on the entire surface of an A4 size recording medium by using the concentrated ink thus prepared and the same ink jet recording apparatus as that described above in an environment at a temperature of 30°C and a relative humidity of 10% at intervals of 5 minutes. At the time of the recording of the solid image on one sheet, about 0.20 mg of the ink was preliminarily ejected into a cap before the recording, and as a cleaning operation, about 0.1 g of the ink was sucked through the cap covering an ejection orifice of the recording head of the apparatus at a ratio of once per 200 sheets. After the image had been recorded on 5,000 sheets, the state of a deposit in the cap was visually observed, and the nozzle check pattern of "Maxify iB4130" was recorded, followed by the recognition of whether or not the nozzle check pattern was normally recorded. With regard to such an ink that no deposit was observed in the cap, the above-mentioned recording was performed on additional 1,000 sheets each, and a deposit was observed at the time point, followed by the evaluation of deposition suppression in accordance with the following evaluation criteria.

AA: After the image had been recorded on 8,000 sheets, no deposit was observed in the cap.
A: After the image had been recorded on 7,000 sheets, no deposit was observed in the cap.
B: After the image had been recorded on 6,000 sheets, no deposit was observed in the cap.
C: After the image had been recorded on 5,000 sheets, no deposit was observed in the cap.
D: After the image had been recorded on 5,000 sheets, a deposit was observed in the cap and hence the nozzle check pattern was not normally recorded.

Table 4: Evaluation results

| | | Color developability | Deposition suppression |
|---|---|---|---|
| Example | 1 | AA | AA |
| | 2 | AA | AA |
| | 3 | AA | AA |
| | 4 | AA | AA |
| | 5 | AA | AA |
| | 6 | AA | AA |
| | 7 | B | AA |
| | 8 | B | AA |
| | 9 | B | AA |
| | 10 | A | AA |
| | 11 | AA | AA |
| | 12 | AA | B |
| | 13 | AA | AA |
| | 14 | AA | AA |
| | 15 | B | AA |
| | 16 | AA | B |
| | 17 | AA | AA |
| | 18 | AA | AA |
| | 19 | AA | B |
| | 20 | AA | A |
| | 21 | A | AA |
| | 22 | B | AA |
| | 23 | AA | A |
| | 24 | AA | AA |
| Example | 25 | AA | AA |
| | 26 | A | AA |
| | 27 | AA | B |
| | 28 | AA | AA |
| | 29 | AA | AA |
| | 30 | AA | B |
| | 31 | B | B |
| | 32 | B | B |
| | 33 | AA | AA |
| | 34 | AA | AA |
| | 35 | AA | AA |

(continued)

| | | Color developability | Deposition suppression |
|---|---|---|---|
| Comparative Example | 1 | D | AA |
| | 2 | D | AA |
| | 3 | E | AA |
| | 4 | E | AA |
| | 5 | E | AA |
| | 6 | AA | D |
| | 7 | C | AA |
| | 8 | C | AA |
| | 9 | E | AA |
| | 10 | A | D |
| | 11 | AA | D |
| | 12 | C | AA |
| | 13 | D | AA |

The color developability of each of Examples 1 and 33 to 35 was at an AA rank. However, the color developability of each of Examples 33 to 35 was relatively excellent as compared to that of Example 1.

Various embodiments have been described in detail above but it will be understood that the present disclosure is not limited to these embodiments and encompasses all modifications, variants, alternatives and equivalents falling within the scope of the appended claims.

## Claims

1. An aqueous ink for ink jet comprising a self-dispersible pigment,

   wherein the self-dispersible pigment comprises a self-dispersible pigment in which a group represented by the following general formula (1) is bonded to a surface of a particle of a pigment, and
   wherein the aqueous ink has a dynamic surface tension at 10 milliseconds of 52 mN/m or less:

   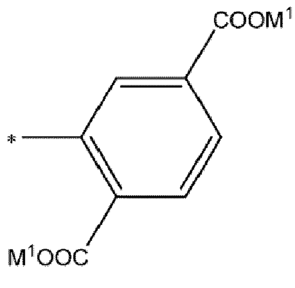

   (1)

   in the general formula (1), $M^1$s each independently represent a hydrogen atom, an alkali metal, ammonium or an organic ammonium, and * represents a bonding position to the surface of the particle of the pigment.

2. The aqueous ink according to claim 1, wherein the pigment comprises carbon black.

3. The aqueous ink according to claim 2, wherein the carbon black has a specific surface area based on a BET method of 200 $m^2$/g or more.

4. The aqueous ink according to any one of claims 1 to 3, wherein an anionic group amount (mmol/g) of the self-dispersible pigment is 0.09 mmol/g or more to 0.20 mmol/g or less.

5. The aqueous ink according to any one of claims 1 to 4, further comprising a compound represented by the following general formula (2):

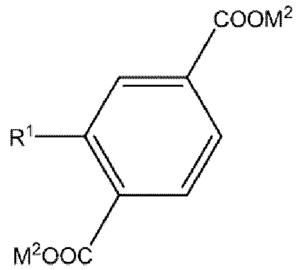

(2)

in the general formula (2), $R^1$ represents a hydroxy group or a nitro group, and $M^2$s each independently represent a hydrogen atom, an alkali metal, ammonium or an organic ammonium.

6. The aqueous ink according to claim 5, wherein a content C (mmol/kg) of the compound represented by the general formula (2) and a content P (% by mass) of the self-dispersible pigment in the aqueous ink satisfy a relationship represented by the following formula (3):

$$0.010 \leq C\ (\text{mmol/kg})/P\ (\%\ \text{by mass}) \leq 3.000 \qquad (3).$$

7. The aqueous ink according to claim 5 or 6, wherein a content C (mmol/kg) of the compound represented by the general formula (2) and a content P (% by mass) of the self-dispersible pigment in the aqueous ink satisfy a relationship represented by the following formula (4):

$$0.030 \leq C\ (\text{mmol/kg})/P\ (\%\ \text{by mass}) \leq 2.000 \qquad (4).$$

8. The aqueous ink according to any one of claims 5 to 7, wherein a molar ratio (times) of a content (mmol/kg) of a compound in which the $R^1$ represents a hydroxy group out of the compounds each represented by the general formula (2) to a content (mmol/kg) of the compounds each represented by the general formula (2) in the aqueous ink is 0.60 times or more to 0.95 times or less.

9. An ink cartridge comprising:

an ink; and
an ink storage portion (14,16) configured to store the ink,
wherein the ink comprises the aqueous ink according to any one of claims 1 to 8.

10. An ink jet recording method comprising ejecting an ink from a recording head (38,40) of an ink jet system to record an image on a recording medium (32),
wherein the ink comprises the aqueous ink according to any one of claims 1 to 8.

FIG. 1

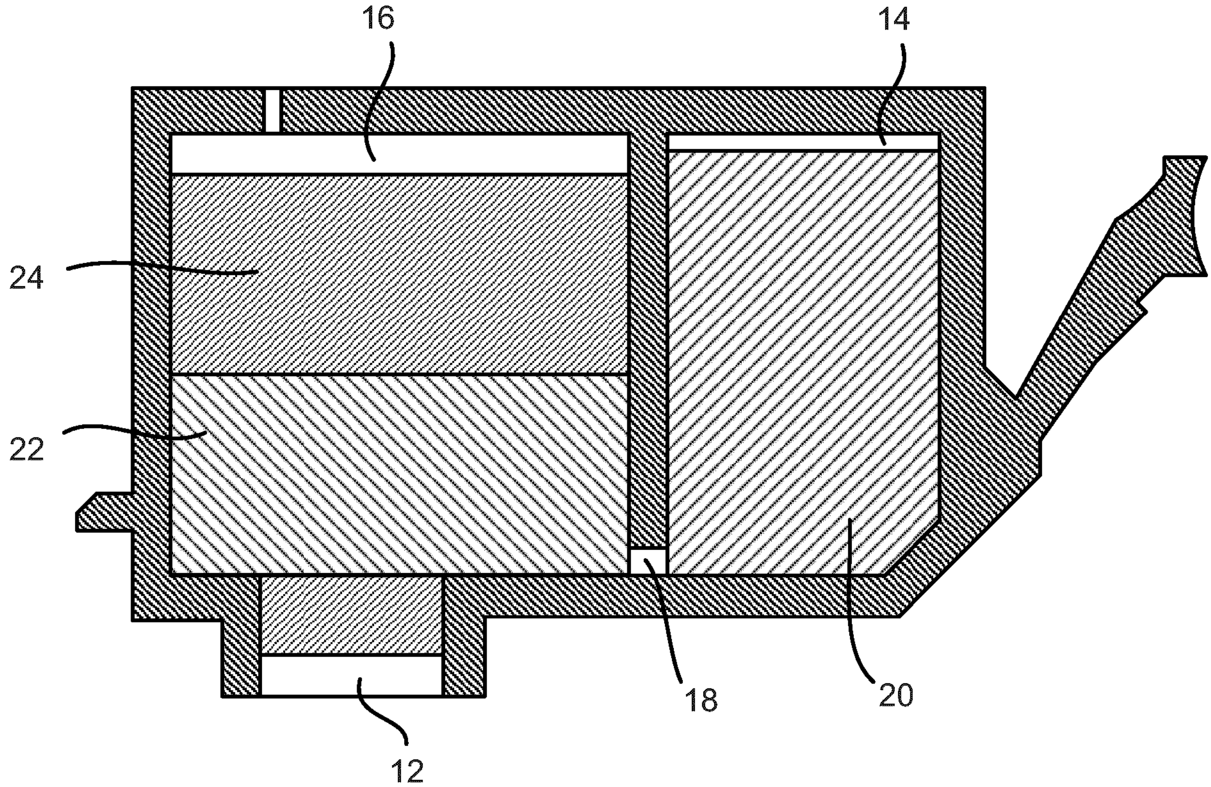

FIG. 2A

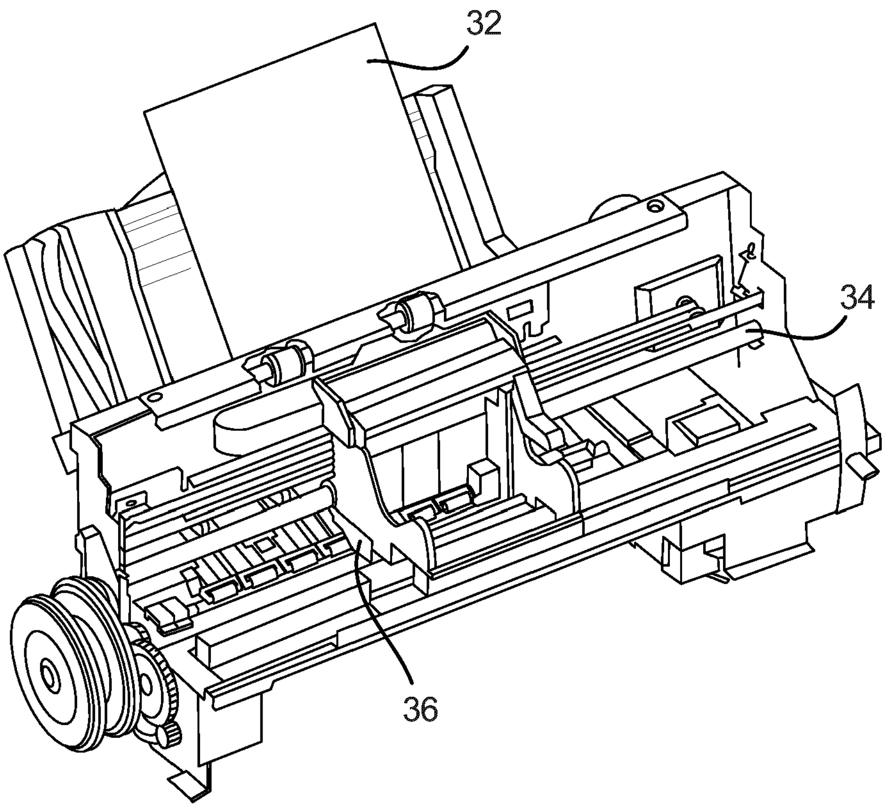

FIG. 2B

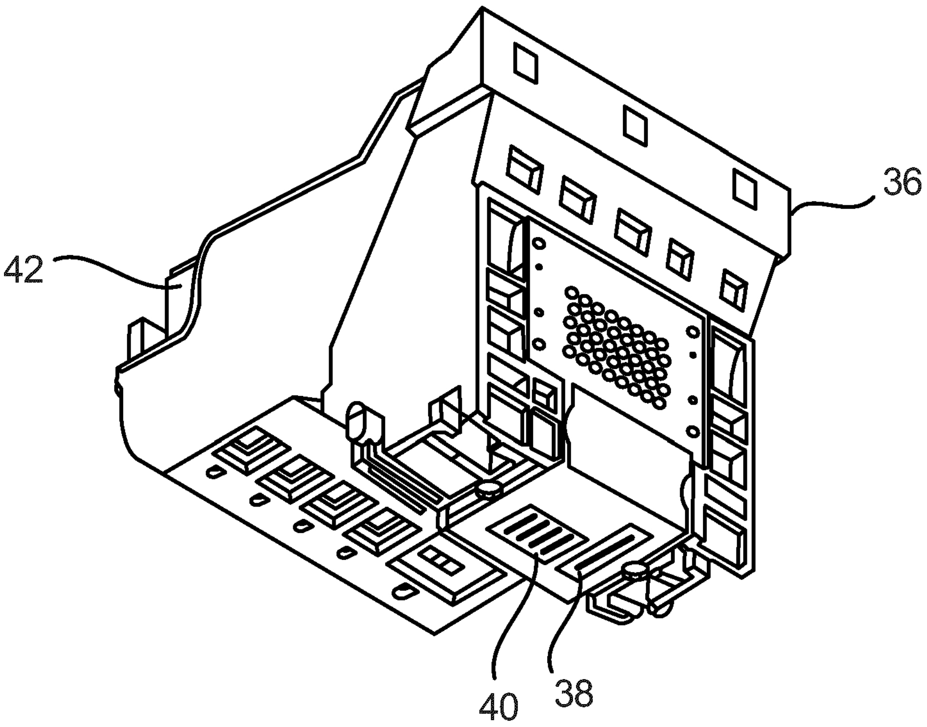

FIG. 3

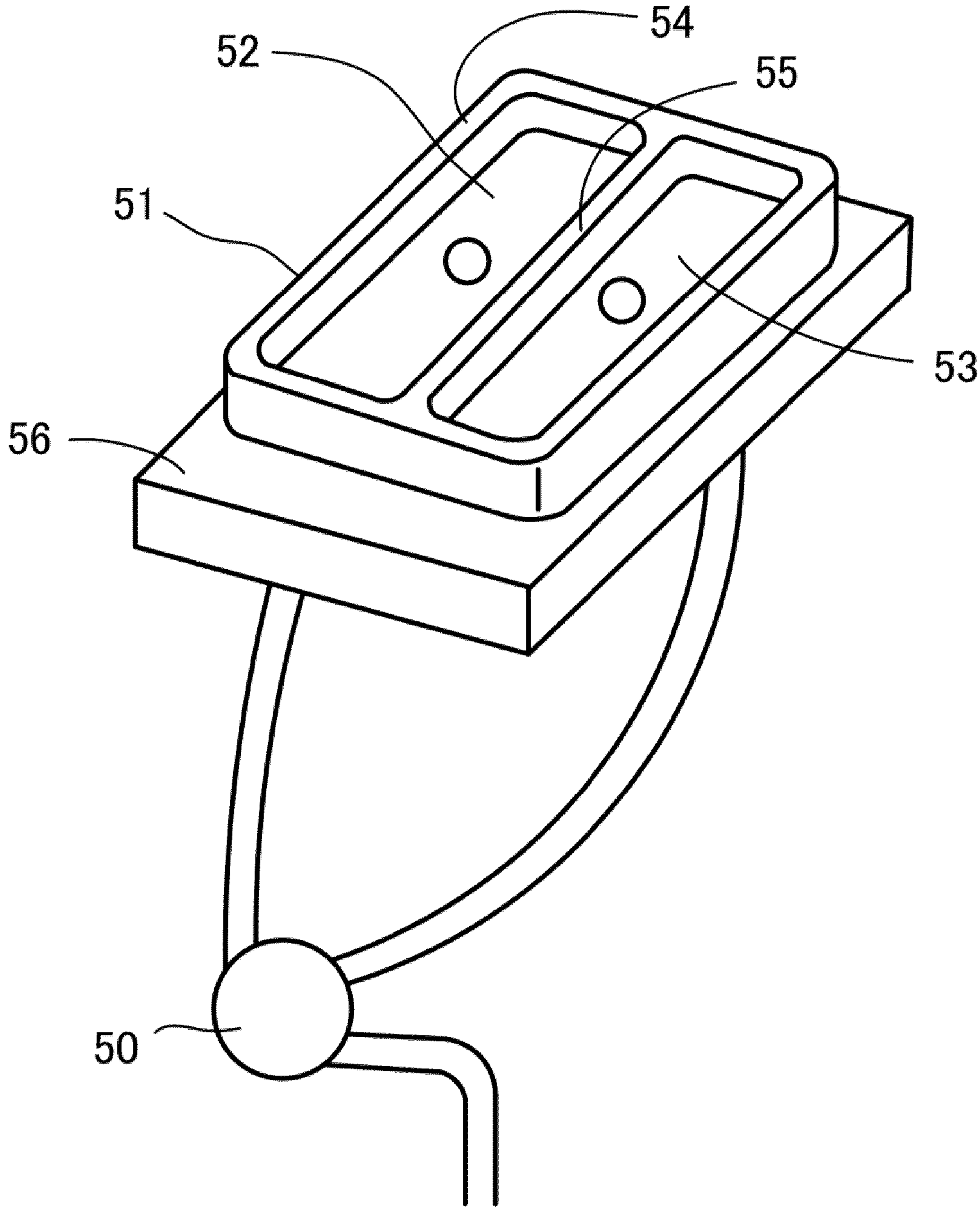

Europäisches Patentamt
European Patent Office
Office européen des brevets

# EUROPEAN SEARCH REPORT

Application Number
EP 25 19 7196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/305011 A1 (MCINTOSH RALPH [DE] ET AL) 10 December 2009 (2009-12-10) * examples; table 1 * ----- | 1-10 | INV. C09D11/324 C09D11/322 C09D11/38 |
| A | EP 1 061 106 A1 (HEWLETT PACKARD CO [US]) 20 December 2000 (2000-12-20) * claims; examples * ----- | 1-10 | |
| A | EP 1 061 107 A1 (HEWLETT PACKARD CO [US]) 20 December 2000 (2000-12-20) * claims; examples * ----- | 1-10 | |
| A | JP 2006 008899 A (CANON KK) 12 January 2006 (2006-01-12) * claims; examples * ----- | 1-10 | |

TECHNICAL FIELDS SEARCHED (IPC)

C09D

The present search report has been drawn up for all claims

1

| Place of search | Date of completion of the search | Examiner |
|---|---|---|
| Munich | 14 January 2026 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 7196

This annex lists the patent family members relating to the patent documents cited in the above-mentioned European search report. The members are as contained in the European Patent Office EDP file on The European Patent Office is in no way liable for these particulars which are merely given for the purpose of information.

14-01-2026

| Patent document cited in search report | Publication date | Patent family member(s) | Publication date |
|---|---|---|---|
| US 2009305011 A1 | 10-12-2009 | CN 101597441 A | 09-12-2009 |
| | | DE 102008026894 A1 | 10-12-2009 |
| | | EP 2130880 A1 | 09-12-2009 |
| | | JP 2009293030 A | 17-12-2009 |
| | | KR 20090127093 A | 09-12-2009 |
| | | US 2009305011 A1 | 10-12-2009 |
| EP 1061106 A1 | 20-12-2000 | DE 60004731 T2 | 01-07-2004 |
| | | EP 1061106 A1 | 20-12-2000 |
| | | JP 3993968 B2 | 17-10-2007 |
| | | JP 2001055532 A | 27-02-2001 |
| EP 1061107 A1 | 20-12-2000 | DE 60004732 T2 | 08-07-2004 |
| | | EP 1061107 A1 | 20-12-2000 |
| | | JP 3993969 B2 | 17-10-2007 |
| | | JP 2001055533 A | 27-02-2001 |
| | | US 6221142 B1 | 24-04-2001 |
| JP 2006008899 A | 12-01-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009506196 A
- JP 2009515007 A
- JP 2006045514 A


### Non-patent literature cited in the description


- **MARUZEN**. Handbook of Chemistry: Pure Chemistry